# EUROPÄISCHE PATENTSCHRIFT

(11) **EP 4 046 340 B1**
(45) Veröffentlichungstag und Bekanntmachung des Hinweises auf die Patenterteilung: **05.04.2023**
(21) Anmeldenummer: 20808408.7
(22) Anmeldetag: 18.11.2020
(51) Int. Cl.: H04L 12/46

(54) **VERFAHREN ZUM BETREIBEN EINES AUTOMATISIERUNGSSYSTEMS UND DATENINFRASTRUKTUR**
METHOD FOR OPERATING AN AUTOMATION SYSTEM AND DATA INFRASTRUCTURE
PROCÉDÉ DE FONCTIONNEMENT D'UN SYSTÈME D'AUTOMATISATION ET INFRASTRUCTURE DE DONNÉES

(30) Priorität: 22.11.2019 DE 102019131622
(43) Veröffentlichungstag der Anmeldung: 24.08.2022
(73) Patentinhaber: Beckhoff Automation GmbH, 33415 Verl (DE)
(72) Erfinder: BECKHOFF, Hans, 33415 Verl (DE); ZINK, Leo, 33415 Verl (DE); GOLDSTEIN, Sven, 32257 Bünde (DE)
(74) Vertreter: Patentanwaltskanzlei WILHELM & BECK
(86) Internationale Anmeldenummer: PCT/EP2020/082543
(87) Internationale Veröffentlichungsnummer: WO 2021/099390

(56) Entgegenhaltungen:
- EP-A1- 2 109 259
- EP-A1- 2 506 502
- EP-B1- 2 109 259
- EP-B1- 2 506 502
- WO-A1-2017/182671
- DE-A1-102017 213 365
- DE-B4-102017 213 365

## Beschreibung

Die vorliegende Erfindung betrifft ein Verfahren zum Betreiben eines Automatisierungssystems und eine Dateninfrastruktur, die insbesondere als eine externe Dateninfrastruktur ausgebildet ist.

Diese Patentanmeldung beansprucht die Priorität der deutschen Patentanmeldung DE 10 2019 131 622.7.

Allgemein befasst sich die Erfindung mit der Einbindung einer externen Dateninfrastruktur in ein Automatisierungssystem und der Auslagerung von Prozessen des Automatisierungssystems in die externe Dateninfrastruktur. Die Erfindung kann insbesondere in Automatisierungssystemen für die Industrieautomation, für die Gebäude- und Klimaautomatisierung, für die Bühnentechnik, für die Energietechnik oder für die Verkehrsleittechnik eingesetzt werden. Im Rahmen der Industrieautomation kann das Automatisierungssystem beispielsweise Pressen, Verpackungsmaschinen oder Anlagen zur Ausführung chemischer Verfahren steuern, im Rahmen der Gebäudeautomatisierung beispielsweise Heizungs- und Lüftungssysteme, Sonnenschutzsysteme oder Zugangssysteme eines Gebäudes. Automatisierungssysteme können in der Energietechnik unter anderem in Windkraftanlagen, Photovoltaiksystemen, Biomassekraftwerken oder in Energieerfassungssystemen eingesetzt werden. Die hier genannten Beispiele sind nicht als abschließende Aufzählung anzusehen und beschränken nicht den Schutzbereich der vorliegenden Erfindung.

Automatisierungssysteme dienen der Steuerung von Automatisierungsprozessen. Ein Automatisierungsprozess umfasst in der Regel ein Einlesen von Eingangsdaten, die den Zustand des Automatisierungsprozesses charakterisieren. Eingangsdaten können auf Messdaten von Sensoren basieren. Auf Grundlage der Eingangsdaten werden, in der Regel durch eine Steuereinheit des Automatisierungssystems, Ausgangsdaten erstellt, die der Steuerung des Automatisierungsprozesses dienen. Die Ausgangsdaten repräsentieren in der Regel Steuerwerte für Aktoren des Automatisierungssystems. Im Folgenden werden Sensoren und Aktoren in dem Begriff Feldgeräte zusammengefasst. Feldgeräte können darüber hinaus weitere Komponenten aufweisen und ausgebildet sein, durch das Aussenden von Eingangsdaten an die Steuereinheit beziehungsweise das Empfangen von durch die Steuerung ausgesendeten Ausgangsdaten an einer Datenkommunikation mit der Steuereinheit teilzunehmen. Hierzu sind die über eine Datenleitung, etwa über einen Feldbus, mit der Steuereinheit des Automatisierungssystems verbunden. Über die Datenleitung werden die eingelesenen Messwerte als Eingangsdaten von den Feldgeräten an die Steuereinheit zur weiteren Verarbeitung übertragen und die von der Steuereinheit bereitgestellten Steuerwerte als Ausgangsdaten an die Feldgeräte überspielt. In solch einem Fall sind die Feldgeräte dazu ausgebildet, eine Konvertierung zwischen den auf der Datenleitung umlaufenden Ein- und Ausgangsdaten und den Feldsignalen auszuführen.

Automatisierungssysteme können in eine Feldebene und eine Steuerebene unterteilt werden. Die Feldebene umfasst alle Feldelemente des Automatisierungssystems, welche in der Regel prozessnah, also an oder in der Nähe einer gesteuerten Anlage, Maschine oder sonstigen technischen Einrichtung angeordnet sind und der Weiterleitung bzw. Konversion der Ein- und Ausgangsdaten, sowie der Feldsignale dienen. Unter anderem umfasst die Feldebene die Feldgeräte und die von diesen umfassten Sensoren und Aktoren. Die Steuerungsebene umfasst die Steuereinheit und alle weiteren Kontrollkomponenten, welche die in der Feldebene erfassten Steuerdaten empfangen und zu Ausgangssteuerdaten für die Ausgabe in die Feldebene verarbeiten. Feldebene und Steuerebene sind in der Regel durch eine oder mehrere Datenleitungen, die als leitungsgebundene oder drahtlose Datenleitungen ausgebildet sein können, miteinander verbunden.

Die Steuereinheit des Automatisierungssystems kann die Ein- und Ausgangsdaten nicht nur zum Zwecke der Steuerung des Automatisierungsprozesses verarbeiten, sondern auch an weitere Steuereinheiten des Automatisierungssystems weiterleiten. Speziell bei komplexen Automatisierungssystemen mit mehreren Steuereinheiten, die jeweils Teilaspekte eines Automatisierungsprozesses steuern, kann eine Datenkommunikation und ein Informationsaustausch zwischen verschiedenen Steuereinheiten notwendig sein. Hierzu kann eine Aufbereitung der aufgenommenen Eingangsdaten durch eine der kommunizierenden Steuerungen notwendig sein, um der jeweils anderen Steuereinheit verwertbare Informationen bereitstellen zu können. Derartige Analysen der aufgenommenen Eingangsdaten durch die Steuereinheit zur Aufbereitung der aufgenommenen Daten erfordert substantielle Rechenleistung durch die jeweilige Steuereinheit, was den Steuervorgang des Automatisierungsprozesses beeinträchtigen kann.

Aus der Druckschrift WO 2017/182671 A1 sind eine Verbindungseinheit, ein Überwachungssystem und ein Verfahren zum Betreiben eines Automatisierungssystems bekannt.

Aufgabe der vorliegenden Erfindung ist es, einen verbesserten Betrieb eines Automatisierungssystems unter Berücksichtigung einer externen Dateninfrastruktur und eine verbesserte Nutzung einer externen Dateninfrastruktur zum Betreiben eines Automatisierungssystems zu ermöglichen.

Diese Aufgaben werden durch ein Verfahren zum Betreiben eines Automatisierungssystems und durch eine Dateninfrastruktur gemäß den unabhängigen Ansprüchen gelöst. Weitere vorteilhafte Ausführungen sind jeweils in den abhängigen Ansprüchen angegeben.

Nach einem ersten Aspekt betrifft die Erfindung ein Verfahren zum Betreiben eines Automatisierungssystems mit einer ersten Steuereinheit und zumindest einer zweiten Steuereinheit zum Ausführen mindestens eines Automatisierungsprozesses und zum Steuern einer Mehrzahl von Feldgeräten, und einer externen Dateninfrastruktur mit einem Nachrichtenverteilermodul zum Vermitteln einer Datenkommunikation zwischen Kommunikationsteilnehmern eines Kommunikationsnetzwerks, umfassend die folgenden Schritte:
Definieren eines ersten Kommunikationsnetzwerks und Identifizieren der ersten Steuereinheit und der zweiten Steuereinheit als Kommunikationsteilnehmer des ersten Kommunikationsnetzwerks durch das Nachrichtenverteilermodul in einem ersten Identifikationsschritt,
Aussenden einer ersten Netzwerknachricht im Rahmen einer Datenkommunikation zwischen den ersten Kommunikationsteilnehmern des ersten Kommunikationsnetzwerks durch die erste Steuereinheit an das Nachrichtenverteilermodul der externen Dateninfrastruktur in einem ersten Sendeschritt,
Identifizieren der zweiten Steuereinheit als den von der ersten Steuereinheit adressierten ersten Kommunikationsteilnehmer des Kommunikationsnetzwerks durch das Nachrichtenverteilermodul in einem zweiten Identifikationsschritt,
Weiterleiten der von der ersten Steuereinheit ausgesendeten ersten Netzwerknachricht an die zweite Steuereinheit durch das Nachrichtenverteilermodul in einem Weiterleitungsschritt, und
Empfangen der weitergeleiteten ersten Netzwerknachricht durch die zweite Steuereinheit in einem Empfangsschritt

Hierdurch wird der technische Vorteil erreicht, dass ein effektives und effizientes Verfahren zum Betreiben eines Automatisierungssystems bereitgestellt werden kann. Durch die Auslagerung von Steuerungsprozessen im weiteren Sinne von den Steuereinheiten eines Automatisierungssystems in eine externe Dateninfrastruktur können Rechnerkapazitäten der Steuereinheiten eingespart werden, die im Folgenden für direkte Steueraufgaben des zu steuernden Automatisierungsprozesses verwendet werden können, wodurch die Effektivität und Effizienz des Automatisierungsprozesses erhöht werden kann.

Sofern im Folgenden ein Identifizieren beschrieben wird, so umfasst das Identifizieren sowohl ein automatisches als auch ein manuelles Identifizieren. Auch wenn im Zusammenhang mit dem Identifizieren im Folgenden ein automatisches Identifizieren beschrieben wird, so schließt diese Beschreibung ein manuelles Identifizieren nicht aus, sondern dieses ist im Rahmen der Erfindung mit umfasst.

Darüber hinaus kann durch das erfindungsgemäße Verfahren zum Betreiben eines Automatisierungssystems eine Datenkommunikation zwischen einzelnen Steuereinheiten des Automatisierungssystems verbessert werden. Für ein Automatisierungssystem, das zum Steuern eines komplexen Automatisierungsprozesses, der aus verschiedenen aufeinander abgestimmten Teilprozessen besteht, eine Mehrzahl von individuellen Steuereinheiten aufweist, die jeweils zum Steuern der Teilprozesse dienen, wird eine effektive und effiziente Methode zur Datenkommunikation zwischen den einzelnen Steuereinheiten bereitgestellt. Zum Abstimmen der individuellen Teilprozesse des Automatisierungsprozesses benötigt es für gewöhnlich eine Datenkommunikation zwischen den die einzelnen Teilprozess steuernden Steuereinheiten, um Prozessdaten, die den Zustand eines der Teilprozesse beschreiben und die zum Steuern eines weiteren Teilprozesses benötigt werden, auszutauschen.

Bei einem Automatisierungssystem mit einer Vielzahl von Steuereinheiten, die eine Vielzahl von Teilprozessen eines Automatisierungsprozesses steuern, sind für gewöhnlich nicht alle der Teilprozesse auf Informationen aus anderen Teilprozessen angewiesen. Für gewöhnlich besteht somit nicht die Notwendigkeit, dass jede der Steuereinheiten mit allen weiteren Steuereinheiten Daten austauscht.

Darüber hinaus kann der Datenaustausch beziehungsweise die Datenkommunikation zwischen Steuereinheiten situationsabhängig sein, sodass Steuereinheiten nicht ausschließlich mit denselben Steuereinheiten kommunizieren, sondern in Abhängigkeit der zu übertragenden Daten die entsprechenden Daten ausschließlich mit einer explizit definierten Gruppe von Steuereinheiten austauschen. Die Teilnehmer dieser Gruppe von kommunizierenden Steuereinheiten können in Abhängigkeit der zu übertragenden Daten variieren. Hierdurch können komplexe und variable Kommunikationsnetzwerke zwischen Steuereinheiten des Automatisierungssystems entstehen, deren Erzeugung und Betrieb einen substantiellen Aufwand benötigen.

Das erfindungsgemäße Verfahren zum Betreiben eines Automatisierungssystems ermöglicht eine einfache Verwaltung und einen unproblematischen Betrieb derartiger Kommunikationsnetzwerke und gewährleistet somit eine effektive und effiziente Datenkommunikation zwischen Steuereinheiten eines Automatisierungssystems.

Hierzu wird die Verwaltung beziehungsweise Regelung der Datenkommunikation zwischen den Steuereinheiten des Automatisierungssystems durch die externe Dateninfrastruktur übernommen. Zu diesem Zweck weist die externe Dateninfrastruktur ein Nachrichtenverteilermodul auf, das eingerichtet ist, die Datenkommunikation zwischen den Steuereinheiten zu vermitteln.

Das Nachrichtenverteilermodul definiert in einem ersten Identifikationsschritt ein erstes Kommunikationsnetzwerk und identifiziert automatisch eine erste Steuereinheit und eine zweite Steuereinheit des Automatisierungssystems als erste Kommunikationsteilnehmer des ersten Kommunikationssystems.

Das Nachrichtenverteilermodul der externen Dateninfrastruktur erkennt alle Steuereinheiten des Automatisierungssystems. Für den Fall, dass das Automatisierungssystem eine Mehrzahl von Steuereinheiten umfasst, die jeweils eine Datenverbindung zur externen Dateninfrastruktur aufweisen, erkennt das Nachrichtenverteilermodul alle Steuereinheiten als potentielle Kommunikationsteilnehmer und ordnet diese entsprechenden Kommunikationsnetzwerken zu.

Für den Austausch von Daten zwischen den Steuereinheiten teilt das Nachrichtenverteilermodul die Mehrzahl von Steuereinheiten in verschiedene Kommunikationsnetzwerke auf, die sich jeweils in Bezug auf die zu vermittelnden Daten unterscheiden. Das Nachrichtenverteilermodul definiert somit automatisch eine Mehrzahl von Kommunikationsnetzwerken und identifiziert die einzelnen Steuereinheiten als Kommunikationsteilnehmer der verschiedenen Kommunikationsnetzwerke.

Einzelne Steuereinheiten können hierbei Kommunikationsteilnehmer mehrerer Kommunikationsnetzwerke sein. Kommunikationsteilnehmer eines Kommunikationsnetzwerks können Daten mit anderen Kommunikationsteilnehmer des Kommunikationsnetzwerks austauschen. Eine Datenkommunikation mit Steuereinheiten, die nicht Kommunikationsteilnehmer desselben Kommunikationsnetzwerks sind, ist hingegen nicht möglich.

Die Aufteilung der Mehrzahl von Steuereinheiten in die Mehrzahl von Kommunikationsnetzwerken ermöglicht somit eine vereinfachte Datenkommunikation, indem gewährleistet ist, dass Daten ausschließlich an die Steuereinheiten übertragen werden, für die eine Übertragung der jeweils zu übertragenden Daten vorteilhaft ist. Dies wird darüber erreicht, dass eine Datenübertragung beziehungsweise eine Datenkommunikation ausschließlich zwischen Steuereinheiten desselben Kommunikationsnetzwerks ermöglicht ist. Durch das automatische Definieren der Kommunikationsnetzwerke und das automatische Identifizieren der Steuereinheiten als Kommunikationsteilnehmer der entsprechenden Kommunikationsnetzwerke durch das Nachrichtenverteilermodul der externen Dateninfrastruktur ist ein aufwändiges Definieren der Struktur der Datenkommunikation zwischen den Steuereinheiten des Automatisierungssystems und eine entsprechender Programmieraufwand zum Erzeugen der Kommunikationsnetzwerke und zum Zuordnen der einzelnen Steuereinheiten zu den jeweiligen Kommunikationsnetzwerken vermeidbar.

Darüber hinaus kann die Datenkommunikation zwischen den Steuereinheiten vereinfacht werden, indem für jede ausgesendete Kommunikationsnachricht eine explizite Adressierung, durch die entsprechende Steuereinheiten als Empfänger der jeweiligen Kommunikationsnachricht gekennzeichnet werden, vermeidbar ist, da ausschließlich Kommunikationsteilnehmer desselben Kommunikationsnetzwerks als potentielle Empfänger der ausgesendeten Nachrichten in Frage kommen. Für eine derartige Kommunikation bietet sich beispielsweise eine Kommunikation nach einem Publisher/Subscriber Mechanismus an, bei dem Nachrichten von einem Sender an alle Kommunikationsteilnehmer desselben Kommunikationsnetzwerks ausgesendet und von diesen empfangen werden.

Nach Definition der Kommunikationsnetzwerke und Identifikation der einzelnen Steuereinheiten als Kommunikationsteilnehmer der jeweiligen Kommunikationsnetzwerke sendet zur Datenkommunikation zwischen der ersten Steuereinheit und der zweiten Steuereinheit die erste Steuereinheit eine erste Netzwerknachricht an das Nachrichtenverteilermodul aus. Das Nachrichtenverteilermodul empfängt die von der ersten Steuereinheit ausgesendete erste Netzwerknachricht und identifiziert anhand der ausgesendeten erste Netzwerknachricht sowohl das Kommunikationsnetzwerk, in dem diese erste Netzwerknachricht zur Datenkommunikation zwischen den jeweiligen Kommunikationsteilnehmern des Kommunikationsnetzwerks auszutauschen ist, sondern identifiziert auch die entsprechenden Kommunikationsteilnehmer des identifizierten Kommunikationsnetzwerks als jeweilige Adressaten der ausgesendeten ersten Netzwerknachricht. Nach Identifikation der adressierten Kommunikationsteilnehmer des jeweiligen Kommunikationsnetzwerks durch das Nachrichtenverteilermodul leitet das Nachrichtenverteilermodul die von der ersten Steuereinheit ausgesendete erste Netzwerknachricht an die Kommunikationsteilnehmer des identifizierten Kommunikationsnetzwerks beziehungsweise die jeweils adressierten Steuereinheiten weiter. Diese empfangen die ausgesendete erste Netzwerknachricht, wodurch die Datenkommunikation erfolgt ist.

Das erfindungsgemäße Verfahren zum Betreiben eines Automatisierungssystems sieht somit eine indirekte Datenkommunikation zwischen Steuereinheiten des Automatisierungssystems vor, in der ausgesendete erste Netzwerknachrichten über ein Nachrichtenverteilermodul einer externen Dateninfrastruktur an die jeweils adressierten Steuereinheiten vermittelt werden.

Eine externe Dateninfrastruktur kann im Folgenden eine externe Servereinheit sein, die nicht in das interne Kommunikationsnetzwerk des Automatisierungssystems eingebunden ist. Beispielsweise kann eine externe Dateninfrastruktur ein externer Cloud-Server sein, der datenbezogenen Dienste anbietet. Die datenbezogenen Dienste können eine Speicherung der Daten zur späteren Verwendung oder eine Auswertung bzw. Analyse der Daten umfassen. Auf diese Weise können etwa ein Energieverbrauch, eine Temperatur oder andere physikalische Parameter des Automatisierungssystems erfasst werden.

Die Rechnersysteme der externen Dateninfrastruktur können mit dem Automatisierungssystem entweder über ein lokales und/oder privates Datennetzwerk oder auch über ein weltweites und/oder grundsätzlich öffentliches Datennetzwerk, etwa das Internet, verbunden sein. Über das Internet zugängliche externe Dateninfrastrukturen werden als Cloud-Dienste unter anderem von verschiedenen Internetkonzernen angeboten.

Kommunikationsteilnehmer können im Folgenden interne Komponenten des Automatisierungssystems sein. Interne Komponenten können Komponenten des Automatisierungssystems sein, die in ein internes Kommunikationsnetzwerk des Automatisierungssystems eingebunden sind. Komponenten, insbesondere in Bezug auf Kommunikationsteilnehmer, können beliebige Einheiten des Automatisierungssystems sein, die zu einer Datenkommunikation befähigt sind. Komponenten beziehungsweise Kommunikationsteilnehmer können beispielsweise Steuereinheiten beziehungsweise im weiteren Sinne Datenverarbeitungseinheiten, wie beispielsweise Industrie-PCs, Personal Computer oder Mobilgeräte sein.

Eine Steuereinheit ist im Folgenden eine SPS (speicherprogrammierbare Steuerung), die zum Steuern eines Automatisierungsprozesses in einem Automatisierungssystem eingesetzt wird. Die Steuereinheit kann eine entsprechende Datenverarbeitungseinheit, beispielsweise einen Industrie-PC oder einen Desktop-Computer umfassen. Alternativ kann eine Steuereinheit eine virtuelle Maschine beziehungsweise ein entsprechendes Softwaremodul sein, das eingerichtet ist, einen Automatisierungsprozess zu steuern.

Eine Netzwerknachricht ist im Folgenden ein Datenpaket oder eine Mehrzahl von Datenpaketen, die auf Basis eines Kommunikationsprotokolls zwischen Kommunikationsteilnehmern übertragbar ist und mittels welchem ein Informationsgehalt austauschbar ist.

Nach einer Ausführungsform umfasst das erfindungsgemäße Verfahren ferner: Erstellen von Eingangsprozessdaten, die einen Zustand des durch das Automatisierungssystem ausgeführten Automatisierungsprozesses repräsentieren, in den Feldgeräten,
Übertragen der Eingangsprozessdaten als Prozessdaten von den Feldgeräten an die erste Steuereinheit im Rahmen eines Austauschs von Prozessdaten in einem Übertragungsschritt, und
Aussenden der Prozessdaten in der ersten Netzwerknachricht im Rahmen der Datenkommunikation innerhalb des ersten Kommunikationsnetzwerks durch die erste Steuereinheit im ersten Sendeschritt.

Hierdurch wird der technische Vorteil erreicht, dass ein effektives und effizientes Verfahren zum Austausch von Prozessdaten zwischen Steuereinheiten eines Automatisierungssystems erreicht werden kann.

In einem Aufnahmeschritt werden von Feldgeräten, die von der ersten Steuerung angesteuert werden, Eingangsprozessdaten aufgenommen. Eingangsprozessdaten sind im Folgenden Messdaten, die von Feldgeräten des Automatisierungssystems, insbesondere Sensoren, aufgenommen werden, und die einen Zustand des durch das Automatisierungssystem ausgeführten Automatisierungsprozesses repräsentieren.

In einem Übertragungsschritt werden die aufgenommenen Eingangsprozessdaten von den Feldgeräten an die erste Steuereinheit übertragen. Die aufgenommenen Prozessdaten werden im Folgenden von der Steuereinheit im Rahmen der Datenkommunikation innerhalb des entsprechenden Kommunikationsnetzwerks an die jeweiligen Kommunikationsteilnehmer des entsprechenden Kommunikationsnetzwerks ausgesendet. Hierdurch kann eine effiziente und effektive Übermittlung von Prozessdaten zwischen verschiedenen Steuereinheiten beziehungsweise verschiedenen Kommunikationsteilnehmern innerhalb des Automatisierungssystems ausgetauscht werden. Hierdurch ist eine effektive Verzahnung von unterschiedlichen Automatisierungsprozessen gewährleistet.

Nach einer Ausführungsform umfasst die externe Dateninfrastruktur ferner eine Steuerinstanz mit einem Analysemodul, das eingerichtet ist, Prozessdaten der Feldgeräte gemäß vorbestimmter Analysevorschriften zu analysieren, umfassend:
Analysieren der Prozessdaten der durch das Nachrichtenverteilermodul empfangenen ersten Netzwerknachricht durch das Analysemodul in einem Analyseschritt,
Aussenden der analysierten Prozessdaten in einer zweiten Netzwerknachricht an die erste Steuereinheit und/oder die zweite Steuereinheit durch das Nachrichtenverteilermodul im Rahmen der Datenkommunikation innerhalb des ersten Kommunikationsnetzwerks in einem zweiten Sendeschritt, und
Beeinflussen des Automatisierungsprozesses durch die erste Steuereinheit und/oder die zweite Steuereinheit auf Basis der analysierten Prozessdaten der zweiten Netzwerknachricht in einem Beeinflussungsschritt.

Hierdurch wird der technische Vorteil erreicht, dass eine effiziente, effektive und detaillierte Datenkommunikation zwischen Komponenten des Automatisierungssystems erzielt werden kann. Hierzu kann die externe Dateninfrastruktur eine Steuerinstanz mit einem Analysemodul umfassen, wobei das Analysemodul eingerichtet ist, Prozessdaten der Feldgeräte des Automatisierungssystems gemäß vorbestimmter Analysevorschriften zu analysieren. Die von den Feldgeräten aufgenommenen Prozessdaten können somit durch das Analysemodul aufbereitet werden, sodass aus den reinen Prozessdaten Information extrahiert werden kann, die für die weiteren Steuereinheiten und die von diesen zu steuernden Automatisierungsprozesse von Interesse sind.

Eine Steuerinstanz kann eine Instanz einer Steuereinheit beziehungsweise einer SPS (speicherprogrammierbaren Steuerung), insbesondere eine virtuelle Instanz auf Basis einer virtuellen Maschine sein, die eingerichtet ist, alle Funktionen einer Steuereinheit auszuführen.

Eine Datenanalyse ist im Folgenden ein Vorgang zur Aufbereitung von Prozessdaten, der aus reinen Prozessdaten analysierte Prozessdaten macht. In Abhängigkeit der Art der Prozessdaten kann die Datenanalyse unterschiedlich ausgestaltet sein und verschiedene Analyseschritte umfassen. Eine Datenanalyse setzt voraus, dass die durch die durchgeführte Datenanalyse erzeugten analysierten Prozessdaten sich wenigstens in einer Eigenschaft zu den ursprünglichen Prozessdaten unterscheiden.

In einem Analyseschritt analysiert das Analysemodul die in der ersten Netzwerknachricht von der ersten Steuereinheit ausgesendeten Prozessdaten und erzeugt entsprechende analysierte Prozessdaten. Durch das Auslagern der Datenanalyse an die externe Dateninfrastruktur kann Rechenkapazität der ersten Steuereinheit eingespart werden, die für die Datenanalyse aufgewendet werden müsste. Die eingesparte Rechenkapazität der ersten Steuereinheit kann für weitere Steuerungsaufgaben des Automatisierungsprozesses verwendet werden. Hierdurch wird eine Effizienzsteigerung der Steuerung des Automatisierungsprozesses erreicht.

Nach erfolgreicher Analyse der Prozessdaten durch das Analysemodul erstellt das Nachrichtenverteilermodul auf Basis der analysierten Prozessdaten eine weitere zweite Netzwerknachricht und sendet diese an die Kommunikationsteilnehmer des jeweiligen Kommunikationsnetzwerks aus.

Das Nachrichtenverteilermodul kann hierbei die analysierten Prozessdaten ausschließlich an die erste Steuereinheit zurückversenden. Dieser Fall beschreibt eine Auslagerung der Datenanalyse von der ersten Steuereinheit in die externe Dateninfrastruktur.

Alternativ kann das Nachrichtenverteilermodul die analysierten Prozessdaten an die zweite Steuereinheit beziehungsweise an weitere Steuereinheiten, die Kommunikationsteilnehmer des Kommunikationsnetzwerks sind, aussenden, sodass eine Datenkommunikation auf Basis der analysierten Prozessdaten zwischen der ersten Steuereinheit und der zweiten Steuereinheit beziehungsweise den weiteren Steuereinheiten erreicht werden kann. Hierdurch wird eine optimierte Datenkommunikation zwischen Steuereinheiten des Automatisierungssystems erreicht, indem eine Datenkommunikation nicht ausschließlich auf reinen Prozessdaten basiert, sondern eine Übertragung der durch die Datenanalyse extrahierten Information umfasst. Durch die durchgeführte Datenanalyse kann der Informationsgehalt der Prozessdaten auf die jeweilig adressierten Kommunikationsteilnehmer individuell zugeschnitten sein, sodass der zu kommunizierende Informationsgehalt maximiert werden kann. Hierdurch wird eine effektive und effiziente Datenkommunikation erreicht.

Die analysierten Prozessdaten werden in einem Beeinflussungsschritt von den jeweiligen Steuereinheiten des Kommunikationsnetzwerks zum Beeinflussen der jeweiligen Automatisierungsprozesse verwendet. Durch die Datenanalyse und die darauffolgende Berücksichtigung der analysierten Prozessdaten zur Steuerung der jeweiligen Automatisierungsprozesse durch die entsprechenden Steuereinheiten kann eine effektive und effiziente Steuerung des Automatisierungsprozesses erreicht werden.

Nach einer Ausführungsform umfasst die externe Dateninfrastruktur ferner eine Steuerinstanz mit einem Entwicklungsmodul zum Erstellen eines Steuerprogramms, welches durch die erste Steuereinheit und/oder die zweite Steuereinheit zum Steuern der Feldgeräte ausführbar ist, wobei das Verfahren ferner umfasst:
Generieren eines Steuerprogramms durch das Entwicklungsmodul in einem Generierungsschritt,
Aussenden des generierten Steuerprogramms in einer dritten Netzwerknachricht an die erste Steuereinheit und/oder die zweite Steuereinheit durch das Nachrichtenverteilermodul im Rahmen der Datenkommunikation innerhalb des ersten Kommunikationsnetzwerks in einem dritten Sendeschritt, und
Ausführen des generierten Steuerprogramms und Beeinflussen des Automatisierungsprozesses durch die erste Steuereinheit und/oder durch die zweite Steuereinheit auf Basis des generierten Steuerprogramms in einem ersten Ausführungsschritt.

Hierdurch wird der technische Vorteil erreicht, dass ein effektives, effizientes und flexibles Verfahren zum Betreiben eines Automatisierungssystems bereitgestellt werden kann. Die Steuerinstanz der externen Dateninfrastruktur umfasst ein Entwicklungsmodul zum Erstellen eines Steuerprogramms zum Steuern des Automatisierungsprozesses des Automatisierungssystems.

Das Entwicklungsmodul kann eine Entwicklungsumgebung zum Programmieren von Software, insbesondere zum Programmieren von Steuerungsprogrammen, sein und alle Funktionen einer Programmierumgebung aufweisen.

In einem Generierungsschritt kann durch das Entwicklungsmodul ein Steuerprogramm generiert werden, das eingerichtet ist, von einer der Steuereinheiten des Automatisierungssystems zur Steuerung des Automatisierungsprozesses ausgeführt zu werden.

Nach erfolgreicher Generierung eines derartigen Steuerprogramms durch das Entwicklungsmodul definiert das Nachrichtenverteilermodul auf Basis des generierten Steuerprogramms eine dritte Netzwerknachricht und sendet diese weitere dritte Netzwerknachricht im Rahmen der Datenkommunikation innerhalb des jeweiligen Kommunikationsnetzwerks an die Kommunikationsteilnehmer des Kommunikationsnetzwerks aus. In Abhängigkeit des Typs des generierten Steuerprogramms definiert das Nachrichtenverteilermodul das jeweilige Kommunikationsnetzwerk und identifiziert die entsprechenden Kommunikationsteilnehmer derart, dass ausschließlich die Kommunikationsteilnehmer, insbesondere die Steuereinheiten, für die das generierte Steuerprogramm vorgesehen ist, durch die ausgesendete dritte Netzwerknachricht adressiert sind. Somit kann ein vereinfachtes Bereitstellen von Steuereinheiten beziehungsweise Komponenten des Automatisierungssystems mit entsprechenden Steuerprogrammen erreicht werden.

Das Nachrichtenverteilermodul ist eingerichtet in Abhängigkeit der auszusendenden Nachricht die Kommunikationsteilnehmer in entsprechende Kommunikationsnetzwerke zusammenzufassen, wobei die Kommunikationsnetzwerke beziehungsweise die Zuordnung von Kommunikationsteilnehmern zu entsprechenden Netzwerken flexibel gestaltbar ist. Das Nachrichtenverteilermodul kann beispielsweise für jede auszusendende Nachrichte neue Kommunikationsnetzwerke generieren, wobei die Kommunikationsteilenehmer derart in den generierten Kommunikationsnetzwerken zusammengefasst werden, dass gewährleistet ist, dass die ausgesendeten Nachrichten an die für derartige Nachrichten adressierten Kommunikationsteilnehmer ausgesendet werden und von diesen empfangen werden.

Durch die einfache Adressierung der jeweiligen Steuereinheiten durch das automatische Definieren der entsprechenden Kommunikationsnetzwerke durch das Nachrichtenverteilermodul kann eine aufwändige Installation von generierten Steuerprogrammen auf den jeweiligen Steuereinheiten, für die das generierte Steuerprogramm vorgesehen ist, vermieden werden.

Durch das zentralisierte Generieren der Steuerprogramme in der externen Dateninfrastruktur und das Aussenden der generierten Steuerprogramme an die jeweiligen Steuereinheiten durch das Nachrichtenverteilermodul kann eine Mehrzahl von Steuereinheiten mit entsprechenden Steuerprogrammen versehen werden, ohne dass hierzu ein übermäßiger Programmieraufwand beziehungsweise Installationsaufwand anfallen würde. Nach Empfang der ausgesendeten dritten Netzwerknachrichten können die jeweiligen Steuereinheiten die entsprechend für diese generierten Steuerprogramme selbständig installieren und in einem Ausführungsschritt die jeweils generierten Steuerprogramme ausführen und den Automatisierungsprozess, beziehungsweise die jeweiligen Teilprozesse, auf Basis des generierten Steuerprogramms beeinflussen. Hierdurch ist ein effizientes und effektives Verfahren zum Bereitstellen von Steuerprogrammen für Steuereinheiten des Automatisierungssystems bereitgestellt.

Nach einer Ausführungsform umfasst die externe Dateninfrastruktur ferner eine Steuerinstanz mit einem Ausführungsmodul zum Ausführen eines Steuerprogramms zum Steuern der Feldgeräte des Automatisierungssystems, wobei das Verfahren ferner umfasst:
Ausführen eines Steuerprogramms und Generieren von Ausgangsprozessdaten durch das Ausführungsmodul in einem zweiten Ausführungsschritt, wobei die Ausgangsprozessdaten Steuerungsanweisungen an die Feldgeräte zum Steuern der Feldgeräte auf Basis des Steuerprogramms umfassen,
Aussenden der generierten Ausgangsprozessdaten in einer vierten Netzwerknachricht an die erste Steuereinheit und/oder die zweite Steuereinheit durch das Nachrichtenverteilermodul im Rahmen der Datenkommunikation innerhalb des ersten Kommunikationsnetzwerks in einem vierten Sendeschritt, und
Beeinflussen des Automatisierungsprozesses auf Basis der generierten Ausgangsprozessdaten des generierten Steuerprogramms durch die erste Steuereinheit und/oder durch die zweite Steuereinheit in einem Steuerschritt.

Hierdurch wird der technische Vorteil erreicht, dass ein effektives und effizientes Verfahren zum Betreiben eines Automatisierungssystems bereitgestellt werden kann, bei dem eine zentralisierte Steuerung des Automatisierungssystems ermöglicht ist. Hierzu umfasst eine Steuerinstanz der externen Dateninfrastruktur ein Ausführungsmodul zum Ausführen eines Steuerprogramms zum Steuern des Automatisierungssystems. In einem zweiten Ausführungsschritt führt das Ausführungsmodul ein Steuerprogramm aus und generiert Ausgangsprozessdaten, die Steuerungsanweisungen an die Feldgeräte zum Steuern der Feldgeräte umfassen. Die Steuerungsanweisungen sind hierbei auf die jeweiligen Feldgeräte angepasst.

Nach Generieren der Ausgangsprozessdaten durch das Ausführungsmodul erzeugt das Nachrichtenvermittlermodul basierend auf den generierten Ausgangsprozessdaten eine vierte Netzwerknachricht und sendet diese an die jeweiligen Kommunikationsteilnehmer des entsprechenden Kommunikationsnetzwerks aus. Auf Basis der generierten Ausgangsprozessdaten beeinflussen die jeweils adressierten Kommunikationsteilnehmer beziehungsweise die adressierten Steuereinheiten den Automatisierungsprozess und steuern auf Basis des generierten Steuerprogramms die entsprechenden Feldgeräte des Automatisierungssystems. Hiermit kann eine zentrale Steuerung des Automatisierungsprozesses erreicht werden.

Nach einer Ausführungsform umfasst das Automatisierungssystem wenigstens eine dritte Steuereinheit, und wobei das Verfahren ferner umfasst:
Definieren eines zweiten Kommunikationsnetzwerks und Identifizieren der dritten Steuereinheit und der ersten Steuereinheit und/oder der zweiten Steuereinheit als zweite Kommunikationsteilnehmer des zweiten Kommunikationsnetzwerks durch das Nachrichtenverteilermodul in einem dritten Identifikationsschritt, wobei eine Datenkommunikation ausschließlich zwischen ersten Kommunikationsteilnehmern des ersten Kommunikationsnetzwerks oder zwischen zweiten Kommunikationsteilnehmern des zweiten Kommunikationsnetzwerks erfolgt.

Hierdurch wird der technische Vorteil erreicht, dass eine flexible Datenkommunikation zwischen Steuereinheiten des Automatisierungssystems erreicht werden kann. In einem Automatisierungssystem mit einer Mehrzahl von Steuereinheiten, die zur Synchronisation einzelner Teilprozesse eines Automatisierungsprozesses in Form einer Datenkommunikation Daten austauschen, wobei der Datenaustausch zwischen Steuereinheiten jedoch von der jeweils auszutauschenden Information derart abhängig ist, dass je nach auszutauschender Information unterschiedliche Steuereinheiten adressiert werden, kann eine vereinfachte Adressierung und damit verbunden vereinfachte Datenkommunikation erreicht werden.

Bei einer Mehrzahl von Steuereinheiten definiert das Nachrichtenverteilermodul entsprechende Kommunikationsnetzwerke und identifiziert automatisch alle Kommunikationsteilnehmer der jeweiligen Kommunikationsnetzwerke. Verschiedene Steuereinheiten können jeweils Kommunikationsteilnehmer verschiedener Kommunikationsnetzwerke sein. Für Kommunikationsteilnehmer eines Kommunikationsnetzwerks ist eine Datenkommunikation mit weiteren Kommunikationsteilnehmern desselben Kommunikationsnetzwerks ermöglicht. Eine Datenkommunikation mit Kommunikationsteilnehmern anderer Kommunikationsnetzwerke sind hingegen nicht möglich. Verschiedene Kommunikationsnetzwerke können sich hierbei in Bezug auf die zu übermittelnde Information zwischen den jeweiligen Kommunikationsteilnehmern unterscheiden.

Beispielsweise kann das Nachrichtenverteilermodul als ein Message-Broker ausgestaltet sein und eine Datenkommunikation zwischen den Steuereinheiten des Automatisierungssystems auf Basis eines Publisher/Subscriber-Mechanismus definiert sein. Ausgesendete Netzwerknachrichten können dabei mit einem Topic versehen sein, über das ein Informationsgehalt der ausgesendeten Netzwerknachricht beschrieben ist. Steuereinheiten des Automatisierungssystems können zur Datenkommunikation beliebige Topics abonnieren, womit die entsprechenden Steuereinheiten für Nachrichten des jeweiligen Topics als potentielle Empfänger gekennzeichnet sein können. Das Nachrichtenverteilermodul kann auf Basis der zur Verfügung stehenden Topics die jeweiligen Datenkommunikationsnetzwerke definieren, sodass ein Kommunikationsnetzwerk für den Austausch von Netzwerknachrichten eines bestimmten Topics beziehungsweise einer Mehrzahl bestimmter Topics vorgesehen ist. Die Kommunikationsteilnehmer eines jeweiligen Kommunikationsnetzwerks ergeben sich hierbei aus der Mehrzahl von Steuereinheiten, die das jeweilige Topic beziehungsweise die jeweilige Mehrzahl von Topics abonniert haben. Durch Definition der verschiedenen Kommunikationsnetzwerke und durch Identifikation der jeweiligen Kommunikationsteilnehmer der verschiedenen Kommunikationsnetzwerke durch das Nachrichtenverteilermodul kann eine verlässliche Datenkommunikation erreicht werden, bei der ausgesendete Netzwerknachrichten ausschließlich an die Kommunikationsteilnehmer beziehungsweise Steuereinheiten des Automatisierungssystems weitergeleitet werden, die als Empfänger für Netzwerknachrichten vom Typ der ausgesendeten Netzwerknachricht vorgesehen sind.

Eine Netzwerknachricht kann somit im Rahmen einer Datenkommunikation zwischen Kommunikationsteilnehmern auf Basis eines Publisher-Subscriber-Modells durch eine der Steuereinheiten des Automatisierungssystems ausgesendet werden. Das Nachrichtenverteilermodul hat als Message-Broker Kenntnis aller an der Datenkommunikation teilnehmenden Steuereinheiten und kann somit die ausgesendete Netzwerknachricht an die Steuereinheiten weiterleiten, die Netzwerknachrichten vom Typ der ausgesendeten Netzwerknachricht beziehungsweise Netzwerknachrichten vom Topic der ausgesendeten Netzwerknachricht abonniert haben. Hierzu definiert das Nachrichtenverteilermodul verschiedene Kommunikationsnetzwerke mit unterschiedlichen Kommunikationsteilnehmern, wobei Kommunikationsteilnehmer eines Kommunikationsnetzwerks Nachrichten der gleichen Topics abonniert haben.

Hierdurch wird eine vereinfachte Datenkommunikation zwischen einer Mehrzahl von Steuereinheiten eines Automatisierungssystems ermöglicht.

Nach einem zweiten Aspekt betrifft die Erfindung eine Dateninfrastruktur zum Ausführen des erfindungsgemäßen Verfahrens zum Betreiben eines Automatisierungssystems, wobei die Dateninfrastruktur als externe Komponente des Automatisierungssystems ausbildbar und mit internen Komponenten eines Automatisierungssystems verbindbar ist, und wobei die Dateninfrastruktur umfasst:
ein Nachrichtenverteilermodul zum Vermitteln einer Datenkommunikation zwischen Kommunikationsteilnehmern eines Kommunikationsnetzwerks des Automatisierungssystems, wobei das Nachrichtenverteilermodul eingerichtet ist, wenigstens ein Kommunikationsnetzwerk zu definieren und Komponenten des Automatisierungssystems als Kommunikationsteilnehmer des Kommunikationsnetzwerks zu identifizieren,
von den Kommunikationsteilnehmern im Rahmen einer Datenkommunikation zwischen den Kommunikationsteilnehmern innerhalb des Kommunikationsnetzwerks ausgesendete Netzwerknachrichten zu empfangen,
adressierte Kommunikationsteilnehmer des Kommunikationsnetzwerks zu identifizieren, und die empfangenen Netzwerknachrichten an die identifizierten Kommunikationsteilnehmer weiterzuleiten.

Hierdurch wird der technische Vorteil erreicht, dass eine leistungsfähige und breit einsetzbare Dateninfrastruktur bereitgestellt werden kann, die ausgebildet ist, das erfindungsgemäße Verfahren zum Betrieb eines Automatisierungssystems auszuführen. Die Dateninfrastruktur kann als eine externe Dateninfrastruktur zu einem Automatisierungssystem ausgebildet sein und mit internen Komponenten, beispielsweise Steuereinheiten, des Automatisierungssystems verbindbar sein.

Zur Durchführung des erfindungsgemäßen Verfahrens zum Betrieb eines Automatisierungssystems umfasst die Datenstruktur ein Nachrichtenverteilermodul, welches eingerichtet ist, Kommunikationsnetzwerke zu definieren und automatisch Komponenten des Automatisierungssystems als Kommunikationsteilnehmer des Kommunikationsnetzwerks zu identifizieren. Das Nachrichtenverteilermodul kann hierzu die oben beschriebenen Schritte ausführen. Das Nachrichtenverteilermodul ist ferner eingerichtet, die Datenkommunikation zwischen den Netzwerkteilnehmern eines Kommunikationsnetzwerks zu vermitteln, indem ausgesendete Netzwerknachrichten durch das Nachrichtenverteilermodul empfangen werden, die jeweils adressierten Kommunikationsteilnehmer identifiziert und die empfangenen Netzwerknachrichten an die identifizierten Kommunikationsteilnehmer weitergeleitet werden. Hierzu kann das Nachrichtenverteilermodul die oben beschriebenen Schritte durchführen.

Nach einer Ausführungsform ist das Nachrichtenverteilermodul eingerichtet, aus einer Mehrzahl von Komponenten des Automatisierungssystems eine Mehrzahl von Kommunikationsnetzwerken zu definieren und die entsprechenden Komponenten als Kommunikationsteilnehmer eines oder mehrerer Kommunikationsnetzwerke zu identifizieren, wobei eine Datenkommunikation ausschließlich unter Kommunikationsteilnehmern desselben Kommunikationsnetzwerks ermöglicht ist.

Hierdurch wird der technische Vorteil erreicht, dass eine flexible und breit einsetzbare Dateninfrastruktur bereitgestellt werden kann, die in der Lage ist, eine Datenkommunikation zwischen einer Mehrzahl von Komponenten eines Automatisierungssystems zu vermitteln. Hierzu ist die Dateninfrastruktur eingerichtet, unter der Mehrzahl von Komponenten des Automatisierungssystems eine Mehrzahl von Kommunikationsnetzwerken mit einer Mehrzahl von Kommunikationsteilnehmern zu definieren, wobei das Nachrichtenverteilermodul eingerichtet ist, für jedes Kommunikationsnetzwerk automatisch die betreffenden Kommunikationsteilnehmer zu identifizieren. Die Komponenten des Automatisierungssystems können hierbei Steuereinheiten des Automatisierungssystems sein. Alternativ können die Kommunikationsteilnehmer auch andere Datenverarbeitungseinheiten sein, wie beispielsweise Personal Computer einer Leitebene des Automatisierungssystems oder Mobilgeräte. Durch das Einteilen der Mehrzahl von Komponenten des Automatisierungssystems in eine Mehrzahl von verschiedenen Kommunikationsnetzwerken ist das Nachrichtenverteilermodul der Dateninfrastruktur in der Lage, eine Datenkommunikation zwischen den Kommunikationsteilnehmern der Kommunikationsnetzwerke gemäß den oben beschriebenen Schritten zu vermitteln.

Alternativ können die Kommunikationsteilnehmer auch Steuereinheiten anderer Automatisierungssysteme sein. Das Nachrichtenverteilermodul wäre hierbei in der Lage die einzelnen Steuereinheiten den jeweiligen Automatisierungssystemen zuzuordnen und entsprechende Kommunikationsnetzwerke dahingehend zu definieren, dass gewährleistet wäre, dass ausschließlich Steuereinheiten eines Automatisierungsprozesses miteinander kommunizieren, während Steuereinheiten anderer Automatisierungssysteme von der Datenkommunikation ausgeschlossen wären. Dies wäre insbesondere für den Fall von Interesse, dass die externe Dateninfrastruktur als ein Cloud-Sever ausgebildet ist und die Dienste von mehreren verschiedenen Anwendern, insbesondere von Betreibern verschiedener Automatisierungssysteme in Anspruch genommen werden können. Durch die Einteilung der verschiedenen Steuereinheiten in unterschiedliche Kommunikationsnetzwerke, wobei vermieden wird, dass Steuereinheiten verschiedener Automatisierungssysteme in identischen Kommunikationsnetzwerken zusammengefasst werden, kann eine systeminterne Datenkommunikation erreicht und verhindert werden, dass Daten unbeabsichtigt an Datenverarbeitungseinheiten anderer Automatisierungssysteme weitergeleitet werden.

Nach einer Ausführungsform umfasst die Dateninfrastruktur ferner eine Steuerinstanz mit einem Analysemodul, wobei das Analysemodul eingerichtet ist, über mindestens eine erste Netzwerknachricht versendete Prozessdaten der Komponenten des Automatisierungssystems zu analysieren, und wobei das Nachrichtenverteilermodul eingerichtet ist, die analysierten Prozessdaten in mindesten einer zweiten Netzwerknachricht an die Kommunikationsteilnehmer des Kommunikationsnetzwerks auszusenden.

Hierdurch wird der technische Vorteil erreicht, dass eine flexible und breit einsetzbare Dateninfrastruktur bereitgestellt werden kann, die neben einer Vermittlung einer Datenkommunikation zwischen Komponenten des Automatisierungssystems eingerichtet ist, eine Datenanalyse von Prozessdaten des Automatisierungssystems durchzuführen.

Hierzu umfasst die Dateninfrastruktur eine Steuerinstanz mit einem Analysemodul, welches eingerichtet ist, Prozessdaten des Automatisierungssystems auf Basis vorbestimmter Analyseverfahren auszuwerten und analysierte Prozessdaten zu erzeugen. Das Nachrichtenverteilermodul der Dateninfrastruktur ist ferner eingerichtet, auf Basis der analysierten Prozessdaten entsprechende zweiten Netzwerknachrichten zu generieren und diese an die jeweiligen Kommunikationsteilnehmer auszusenden, für die diese analysierten Prozessdaten bestimmt sind. Hierdurch ist die Dateninfrastruktur in der Lage, eine komplexe Datenkommunikation zwischen Steuereinheiten des Automatisierungssystems bereitzustellen, die über einen Austausch von Prozessdaten hinausgeht. Hierzu können das Analysemodul und das Nachrichtenverteilermodul die oben beschriebenen Schritte ausführen.

Nach einer Ausführungsform umfasst die Steuerinstanz ferner ein Entwicklungsmodul, wobei das Entwicklungsmodul eingerichtet ist, ein Steuerprogramm zum Steuern des Automatisierungsprozesses zu generieren, und wobei das Nachrichtenverteilermodul eingerichtet ist, das generierte Steuerprogramm in einer dritten Netzwerknachricht an die Kommunikationsteilnehmer des Kommunikationsnetzwerks auszusenden.

Hierdurch wird der technische Vorteil erreicht, dass eine flexible und breit einsetzbare Dateninfrastruktur bereitgestellt werden kann, die eine Steuerinstanz mit einem Entwicklungsmodul umfasst, das eingerichtet ist, ein Steuerprogramm zum Steuern eines Automatisierungsprozesses des Automatisierungssystems zu generieren. Das Entwicklungsmodul kann eine Programmierumgebung sein, mittels welcher ein Steuerprogramm zum Steuern des Automatisierungsprozesses generiert werden kann, das durch die Steuereinheiten des Automatisierungssystems ausführbar ist und auf Basis dessen Feldgeräte des Automatisierungssystems angesteuert werden können. Hierzu kann das Entwicklungsmodul die oben beschriebenen Schritte ausführen.

Nach einer Ausführungsform umfasst die Steuerinstanz ferner ein Ausführungsmodul zum Ausführen eines Steuerprogramms zum Steuern des Automatisierungsprozesses, wobei das Ausführungsmodul eingerichtet ist, ein Steuerprogramm auszuführen und Ausgangsprozessdaten zu generieren, wobei die Ausgangsprozessdaten Steuerungsanweisungen an die Komponenten des Automatisierungssystems zum Steuern des Automatisierungsprozesses auf Basis des Steuerprogramms umfasst, und wobei das Nachrichtenverteilermodul eingerichtet ist, die generierten Ausgangsprozessdaten in einer vierten Netzwerknachricht an die Kommunikationsteilnehmer des Kommunikationsnetzwerks auszusenden.

Hierdurch wird der technische Vorteil erreicht, dass eine flexible und breit einsetzbare Dateninfrastruktur bereitgestellt werden kann, die eine Steuerinstanz mit einem Ausführungsmodul aufweist, wobei das Ausführungsmodul eingerichtet ist, ein Steuerprogramm zum Steuern eines Automatisierungsprozesses des Automatisierungssystems auszuführen und Ausgangsprozessdaten zu genieren, die Steuerungsanweisungen an die Komponenten des Automatisierungssystems umfassen. Die Steuerinstanz ist somit mit dem Ausführungsmodul in der Lage, Automatisierungsprozesse des Automatisierungssystems zu steuern. Somit kann durch die erfindungsgemäße Dateninfrastruktur eine zentralisierte Steuerung eines Automatisierungssystems bereitgestellt werden, bei der ein Steuerprogramm beziehungsweise eine Mehrzahl von Steuerprogrammen durch eine entsprechende Steuerinstanz ausgeführt und entsprechende Steueranweisungen generiert werden. Das Ausführungsmodul kann hierzu die oben beschriebenen Schritte ausführen.

Nach einer Ausführungsform umfasst die Dateninfrastruktur ferner ein Eingabemodul zum Eingeben von Eingabeaufforderungen an die Steuerinstanz, wobei das Eingabemodul mit der Steuerinstanz verbindbar ist und einem Nutzer ermöglicht:
einen Analyseprozess des Analysemoduls einzusehen und/oder durch eine entsprechende Eingabeaufforderung zu beeinflussen,
über eine entsprechende Eingabeaufforderung an das Entwicklungsmodul das Steuerprogramm zu generieren, und
die Steuerung des Automatisierungsprozesses zu beeinflussen und/oder Prozessdaten des Automatisierungsprozesses einzusehen.

Hierdurch wird der technische Vorteil erreicht, dass eine flexible und breit einsetzbare sowie einfach zu bedienende Dateninfrastruktur bereitgestellt werden kann, die eingerichtet ist, das erfindungsgemäße Verfahren zum Betrieb eines Automatisierungssystems auszuführen. Zur vereinfachten Bedienbarkeit der Dateninfrastruktur umfasst die Dateninfrastruktur ferner ein Eingabemodul, das mit der Steuerinstanz der Dateninfrastruktur verbindbar ist. Über das Eingabemodul ist es einem Nutzer der Dateninfrastruktur ermöglicht, Vorgänge des Analysemoduls einzusehen beziehungsweise auf diese einzuwirken. Über das Eingabemodul kann der Nutzer die vom Analysemodul durchgeführte Datenanalyse der Prozessdaten des Automatisierungssystems überwachen und die generierten, analysierten Prozessdaten einsehen. Ferner ist der Nutzer in der Lage, den Analyseprozess des Analysemoduls zu steuern und auf das vom Analysemodul durchgeführte Analyseverfahren einzuwirken, um somit den Analysevorgang entsprechend zu gestalten. Der Nutzer ist somit in der Lage, über entsprechende Eingaben über das Eingabemodul die aufgenommenen Prozessdaten nach seiner Maßgabe zu analysieren.

Der Nutzer ist ferner in der Lage, über eine entsprechende Eingabeaufforderung an das Entwicklungsmodul das Steuerprogramm zu generieren. Der Nutzer hat über das Eingabemodul, das mit der Steuerinstanz verbunden ist, Zugriff auf das Entwicklungsmodul und kann über entsprechende Eingaben über das Eingabemodul das Steuerprogramm generieren. Wie oben erwähnt, kann das Entwicklungsmodul als eine Programmierumgebung ausgeführt sein. Das Eingabemodul ermöglicht dem Nutzer somit einen Zugang zu dem als Programmierumgebung ausgestalteten Entwicklungsmodul und erlaubt dem Nutzer somit über das Eingabemodul eine Programmierung eines Steuerprogramms durchzuführen. Neben einem Steuerprogramm kann der Nutzer andere Softwarekomponenten durch entsprechende Eingaben an das Eingabemodul innerhalb des Entwicklungsmoduls generieren.

Ferner ist der Nutzer über das Eingabemodul in der Lage, die Steuerung des Automatisierungsprozesses zu beeinflussen und/oder Prozessdaten einzusehen. Über eine entsprechende Eingabe an das Eingabemodul kann der Nutzer beispielsweise die Ausführung eines Steuerprogramms anhalten beziehungsweise starten und somit auf die Steuerung des Automatisierungsprozesses einwirken. Ferner kann der Nutzer über entsprechende Eingaben in das Eingabemodul neu generierte Steuerprogramme installieren und die Steuerung des Automatisierungssystems zum Ausführen des Steuerprogramms auffordern und somit in die Steuerung des Automatisierungssystems eingreifen.

Nach einer Ausführungsform ist die Dateninfrastruktur als ein Cloud-Server ausgestaltet, wobei das Eingabemodul als eine Website ausgestaltet ist, über die sich ein Nutzer in der Dateninfrastruktur einwählen kann, und wobei das Eingabemodul auf einer Rechnereinheit, insbesondere einem Personal Computer oder einem Mobilgerät aufrufbar ist.

Hierdurch wird der technische Vorteil erreicht, dass eine flexible und breit einsetzbare Dateninfrastruktur bereitgestellt werden kann. Durch die Ausbildung der Dateninfrastruktur als ein Cloud-Server kann die Dateninfrastruktur für eine Vielzahl von verschiedenen Automatisierungssystemen eingesetzt werden. Das Eingabemodul kann hierbei als eine Website ausgestaltet sein, über die sich ein Nutzer in der Dateninfrastruktur einwählen kann und mit den oben beschriebenen Funktionen auf die Steuerung des Automatisierungssystems einwirken kann. Das als Website ausgebildete Eingabemodul kann auf einer beliebigen Datenverarbeitungseinheit, insbesondere einem Personal Computer oder einem Mobilgerät, ausgeführt und durch den Nutzer aufgerufen werden. Der Nutzer ist somit in der Lage, sich beispielsweise über sein Smartphone oder Tablet-Computer in die Dateninfrastruktur einzuwählen und somit in die Steuerung des Automatisierungssystems einzuwirken. Hierdurch ist eine hohe Flexibilität erreicht, die es ermöglicht, dass ein Nutzer von einem beliebigen Ort auf die Steuerung eines Automatisierungssystems einwirken kann. Die als Cloud-Server ausgebildete Dateninfrastruktur kann dabei über eine Internetverbindung mit den Komponenten des Automatisierungssystems verbunden sein. Dies ermöglicht eine dezentrale Anordnung der Dateninfrastruktur. Durch das Ausgestalten des Eingabemoduls als eine Website, die von einem beliebigen Computergerät aufgerufen werden kann und über die die oben beschriebenen Funktionen des Eingabemoduls ausgeführt werden können, ist es ermöglicht, an beliebigen Orten weltweit und zu beliebigen Zeiten die Steuerung des Automatisierungssystems einzusehen und auf diese einzuwirken. Hierdurch ist eine hohe Flexibilität in der Steuerung des Automatisierungssystems erreicht.

Durch die Ausbildung der Dateninfrastruktur als Cloud-Server kann erreicht werden, dass die Dateninfrastruktur zur Steuerung einer Vielzahl von Automatisierungssystemen verwendet werden kann. Hier kann eine Mehrzahl von Steuerinstanzen und eine Mehrzahl von Nachrichtenverteilermodulen auf der Dateninfrastruktur eingerichtet sein, die jeweils zur Steuerung eines Automatisierungssystems dienen.

Über das als Website ausgestaltete Eingabemodul können sich verschiedene Nutzer über individualisierte Zugangsinstanzen in den Cloud-Server einwählen und Zugang zu einer personalisierten Steuerinstanz beziehungsweise einer Mehrzahl von Steuerinstanzen erhalten, um hierüber die Steuervorgänge der einzelnen Automatisierungssysteme beeinflussen oder einsehen zu können. Hierdurch wird wiederum ein hoher Grad an Flexibilität erreicht, indem die Dateninfrastruktur eine Grundbasis zur Steuerung einer Mehrzahl von verschiedenen und nicht miteinander assoziierten Automatisierungssystemen bereitstellt. Dies kann beispielsweise für Großkonzerne von Interesse sein, die eine Mehrzahl von Automatisierungssystemen betreiben, deren Steuerung beziehungsweise Monitoring der Steuerung auf der zentralisierten Dateninfrastruktur zugeordnet sein können. Hierdurch kann eine Komplexität derartiger Unternehmen verringert und eine Produktivität erhöht werden.

Alternativ können die beschriebenen Dienste des Cloud-Servers von einer Mehrzahl verschiedener Betreiber von Automatisierungssystemen in Anspruch genommen werden, die parallel über den Cloud-Server und individualisierte Steuereinstanzen Steuervorgänge der von den Betreibern betriebenen Automatisierungssysteme beeinflussen oder einsehen können.

Die Erfindung wird im Folgenden anhand von Figuren näher erläutert. Dabei zeigen in jeweils schematischer Darstellung:
- Fig. 1: eine schematische Darstellung eines Automatisierungssystems gemäß einer Ausführungsform;
- Fig. 2: ein Flussdiagramm eines Verfahrens zum Betreiben eines Automatisierungssystems gemäß einer Ausführungsform;
- Fig. 3: ein Flussdiagramm eines Verfahrens zum Betreiben eines Automatisierungssystems gemäß einer weiteren Ausführungsform;
- Fig. 4: ein Flussdiagramm eines Verfahrens zum Betreiben eines Automatisierungssystems gemäß einer weiteren Ausführungsform;
- Fig. 5: ein Flussdiagramm eines Verfahrens zum Betreiben eines Automatisierungssystems gemäß einer weiteren Ausführungsform;
- Fig. 6: eine schematische Darstellung einer Dateninfrastruktur gemäß einer Ausführungsform;
- Fig. 7: eine schematische Darstellung einer Dateninfrastruktur gemäß einer weiteren Ausführungsform; und
- Fig. 8: eine schematische Darstellung eines Eingabemoduls gemäß einer Ausführungsform.

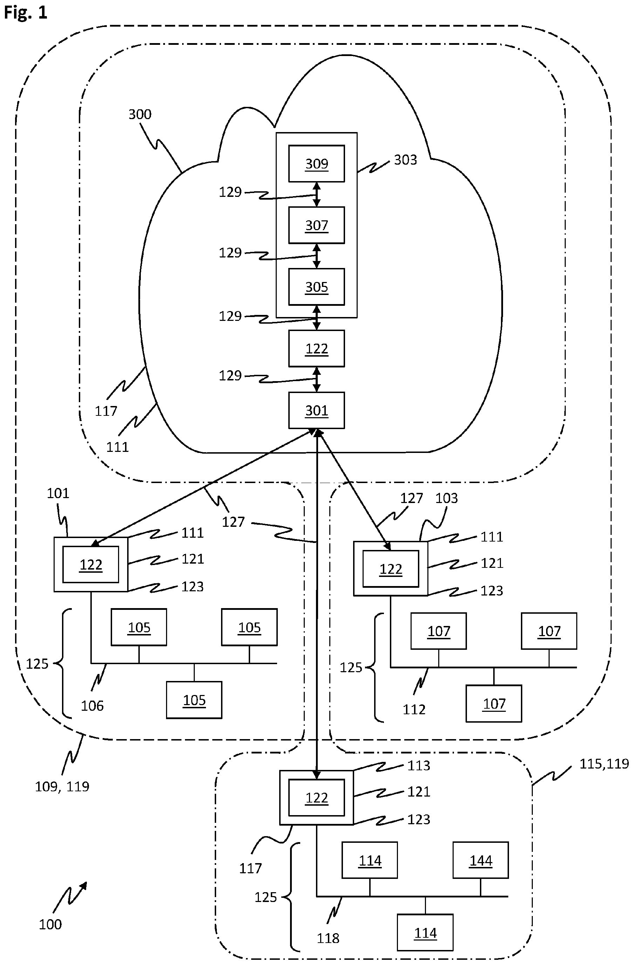

Fig. 1 zeigt eine schematische Darstellung eines Automatisierungssystems 100 gemäß einer Ausführungsform.

Fig. 1 zeigt exemplarisch eine Ausführungsform eines Automatisierungssystems 100, das zur Illustration einzelner Elemente des Automatisierungssystems 100, auf das das erfindungsgemäße Verfahren 200 zum Betreiben eines Automatisierungssystems 100 einwirkt, dient. Das in Fig. 1 dargestellte Automatisierungssystem 100 dient ausschließlich illustrativen Zwecken und kann in verschiedenen Elementen des Automatisierungssystems 100 von der in Fig. 1 gezeigten Ausführungsform abweichen.

Das Automatisierungssystem 100 in Fig. 1 umfasst eine erste Steuereinheit 101, die über ein erstes Bussystem 106 mit ersten Feldgeräten 105 verbunden ist. Das Automatisierungssystem 100 umfasst ferner eine zweite Steuereinheit 103, die wiederum über ein zweites Bussystem 112 mit zweiten Feldgeräten 107 verbunden ist. Darüber hinaus umfasst das Automatisierungssystem 100 eine dritte Steuereinheit 113, die über ein drittes Bussystem 118 mit dritten Feldgeräten 114 verbunden ist. Die Anzahl der dargestellten Steuereinheiten 123 sowie die Anzahl der dargestellten Feldgeräte 125 ist lediglich beispielhaft und ist beliebig veränderbar. Die erste Steuereinheit 101, die zweite Steuereinheit 103 und die dritte Steuereinheit 113 sind jeweils über ein externes Datennetzwerk 127 mit einer externen Dateninfrastruktur 300 verbunden.

Die externe Dateninfrastruktur 300 umfasst ein Nachrichtenverteilermodul 301 und eine Steuerinstanz 303. Die Steuerinstanz 303 weist wiederum ein Analysemodul 305, ein Entwicklungsmodul 307 ein Ausführungsmodul 309 auf.

Für eine Datenkommunikation zwischen den Steuereinheiten 123 und der externen Dateninfrastruktur 300 weisen die erste Steuereinheit 101, die zweite Steuereinheit 103 und die dritte Steuereinheit 113 jeweils eine Routing-Einheit 122 auf, mittels welcher Netzwerknachrichten in Form von Datenpaketen über das externe Datennetzwerk 127 an die externe Dateninfrastruktur 300 ausgesendet und von dieser empfangen werden können. Zur Datenkommunikation weist die externe Dateninfrastruktur 300 ebenfalls eine Routing-Einheit 122 auf, mittels der entsprechende Datenpakete von den Steuereinheiten 123 empfangen beziehungsweise an diese ausgesendet werden können.

Die einzelnen Module der externen Dateninfrastruktur 300 sind über ein internes Datennetzwerk 129 miteinander verbunden, sodass eine interne Datenkommunikation zwischen den Modulen der externen Dateninfrastruktur 300 ermöglicht ist.

Darüber hinaus sind in Fig. 1 die erste Steuereinheit 101, die zweite Steuereinheit 103 und die dritte Steuereinheit 113 in zwei Kommunikationsnetzwerke 119 aufgeteilt. So umfasst das erste Kommunikationsnetzwerk 109 die erste Steuereinheit 101, die zweite Steuereinheit 103 und die externe Dateninfrastruktur 300, die somit jeweils erste Kommunikationsteilnehmer 111 des ersten Kommunikationsnetzwerks 109 darstellen.

Darüber hinaus ist in Fig. 1 ein zweites Kommunikationsnetzwerk 115 definiert, das lediglich die dritte Steuereinheit 113 und die externe Dateninfrastruktur 300 als zweite Kommunikationsteilnehmer 117 umfasst. Die Einteilung der Steuereinheiten 123 in ein erstes Kommunikationsnetzwerk 109 und ein zweites Kommunikationsnetzwerk 115 ermöglicht dem Nachrichtenverteilermodul 301 eine vereinfachte Vermittlung einer Datenkommunikation zwischen den Steuereinheiten 123. Eine Datenkommunikation ist ausschließlich zwischen Kommunikationsteilnehmern 121 desselben Kommunikationsnetzwerks 119 ermöglicht.

In der Ausführungsform in Fig. 1 ist die externe Dateninfrastruktur 300 als ein Cloud-Server ausgebildet. Das externe Datennetzwerk 127, über das eine Datenverbindung zwischen den Steuereinheiten 123 und der externen Dateninfrastruktur 300 ermöglicht ist, kann in diesem Zusammenhang als eine Internetverbindung ausgestaltet werden, sodass entsprechende im Rahmen einer Datenkommunikation zwischen den Steuereinheiten 123 und der externen Dateninfrastruktur 300 auszutauschenden Netzwerknachrichten strukturell entsprechenden Kommunikationsprotokollen entsprechen.

Die Datenkommunikation zwischen den Steuereinheiten 123 des Automatisierungssystems 100 kann auf Basis einer Publisher/Subscriber-Architektur organisiert sein. Hierbei kann das Nachrichtenverteilermodul 301 als ein Message Broker ausgebildet sein, der in der Lage ist, empfangene Netzwerknachrichten an die entsprechend adressierten Kommunikationsteilnehmer 121 der jeweiligen Kommunikationsnetzwerke 119 zu vermitteln. Einzelne Netzwerknachrichten können hierbei derart ausgestaltet sein, dass diese über ein Topic gekennzeichnet sind, anhand dessen ein Informationsgehalt der jeweiligen Netzwerknachricht ablesbar ist. Einzelne Kommunikationsteilnehmer 121, insbesondere die dargestellten Steuereinheiten 123 und die externe Dateninfrastruktur 300 können in der Funktion eines Subscribers Nachrichten eines beliebigen Topics beziehungsweise verschiedener Topics abonnieren. Anhand der abonnierten Topics kann das Nachrichtenverteilermodul 301 die einzelnen Steuereinheiten 123 in entsprechenden Kommunikationsnetzwerken 119 zusammenfassen, sodass Steuereinheiten 123 mit identischen abonnierten Topics in einem Kommunikationsnetzwerk 119 zusammengefasst werden. Steuereinheiten 123, die das jeweilige Topic des zuvor definierten Kommunikationsnetzwerks 119 nicht abonniert haben, sind somit kein Kommunikationsteilnehmer 121 des jeweiligen Kommunikationsnetzwerks 119.

Über die Definition der einzelnen Kommunikationsnetzwerke 119 und die Zuweisung der Kommunikationsteilnehmer 121 zu einzelnen Kommunikationsnetzwerken 119 kann das Nachrichtenverteilermodul 301 Zugangsrechte verteilen, die vorsehen, welcher der Kommunikationsteilnehmer 121 welche Netzwerknachrichten erhält beziehungsweise zu welchen Datenkommunikationen insbesondere zu welchen Kommunikationsnetzwerken 119 Zugang erhält.

Die in Fig. 1 dargestellten Feldgeräte 125 der Steuereinheiten 123 können Aktoren wie auch Sensoren umfassen und in der Lage sein, Prozessdaten aufzunehmen, die einen Zustand des durch die jeweilige Steuereinheit 123 gesteuerten Automatisierungsprozesses beschreiben. Das erste Bussystem 106, das zweite Bussystem 112 und das dritte Bussystem 118 können beliebige Feldbussysteme sein und eine auf entsprechenden Kommunikationsprotokollen basierende Datenkommunikation zwischen der jeweiligen Steuereinheit 123 und der entsprechenden Feldgeräte 125 ermöglichen.

Die Datenkommunikation zwischen den Steuereinheiten 123 und der externen Dateninfrastruktur 300 über das externe Datennetzwerk 127 kann auf Basis eines MQTT-Protokolls durchgeführt werden. Die einzelnen Netzwerknachrichten können somit in Form entsprechender MQTT-Telegramme ausgestaltet sein. Mittels der im MQTT-Telegramm vorgesehenen Topic-Einheit kann jede ausgesendete Netzwerknachricht einem entsprechenden Kommunikationsnetzwerk mit Kommunikationsteilnehmern zugeordnet werden, die jeweils als Abonnenten für Netzwerknachrichten dieses bestimmten Topics klassifiziert sind.

Alternativ zu der in Fig. 1 gezeigten Ausführungsform kann die dritte Steuereinheit 113 mit den dritten Feldgeräten 114 und dem dritten Bussystem 118 Bestandteil eines weiteren Automatisierungssystems sein, das kein Bestandteil des Automatisierungssystems 100 ist. In diesem Fall ist durch die Aufteilung der Kommunikationsteilnehmer 121 in die zwei Kommunikationsnetzwerke 119 erreicht, dass keine Datenübertragung zwischen Kommunikationsteilnehmern 121 unterschiedlicher Automatisierungssysteme stattfindet. Dies ist insbesondere interessant für den Fall, dass die externe Dateninfrastruktur 300 als Cloud-Server ausgestaltet ist und Dienste des Cloud-Servers von verschiedenen Betreibern von Automatisierungssystemen in Anspruch genommen werden.

Alternativ können die dritte Steuereinheit 113 und die dritten Feldgeräte 114 Bestandteil des Automatisierungssystem 100 sein, die jedoch nicht zu dem durch die erste Steuereinheit 101 und die zweite Steuereinheit 103 gesteuerten Automatisierungsprozess beitragen. Eine Datenkommunikation zwischen der ersten Steuereinheit 101 und der dritten Steuereinheit 113 beziehungsweise zwischen der zweiten Steuereinheit 103 und der dritten Steuereinheit 113 ist somit nicht vorgesehen.

Wie bereits erwähnt kann die externe Dateninfrastruktur 300 als Cloud-Server datenbasierte Dienste anbieten. Hierfür kann die externe Dateninfrastruktur 300 einen Datendienst ausführen, welcher die an die externe Dateninfrastruktur 300 übermittelten Prozessdaten verarbeitet, beispielsweise speichert, analysiert oder auf sonstige Weise auswertet. Die externe Dateninfrastruktur 300 kann auch mehrere der Datendienste bereitstellen. Die externe Dateninfrastruktur 300 kann dazu ausgebildet sein, die Prozessdaten oder die Ergebnisse der Analyse oder Verarbeitung über das externe Datennetzwerk 127 einer weiteren Anwendung, beispielsweise einer auf einem weiteren Rechner oder einem mobilen Endgerät ablaufenden Anwendung, zur Verfügung zu stellen. Auf der externen Dateninfrastruktur 300 können die Prozessdaten auch mittels Methoden des maschinellen Lernens ("machine learning") oder des "data-minings" analysiert bzw. verarbeitet werden.

Die externe Dateninfrastruktur 300 kann auch dazu ausgebildet sein, Prozessdaten als Ausgangsprozessdaten bereitzustellen. Die Ausgangsprozessdaten können beispielsweise durch den auf Grundlage der zuvor von der ersten Steuereinheit 101 übermittelten Eingangsprozessdaten erstellt werden, um den Zustand des Automatisierungsprozesses zu beeinflussen. Auf diese Weise können beispielsweise Steuerungsfunktionen des Automatisierungsprozesses auf der externen Dateninfrastruktur 300 abgearbeitet werden. Die Ausgangsprozessdaten können aber auch auf Grundlage von Daten erstellt worden sein, die der externen Dateninfrastruktur 300 von anderen Komponenten, beispielsweise von weiteren Steuereinheiten 123 über das externe Datennetzwerk 127 zur Verfügung gestellt werden.

Die Ausgangsprozessdaten können im Rahmen des Austauschs der Prozessdaten zwischen der externen Dateninfrastruktur 300 und der Steuereinheit 123 von der externen Dateninfrastruktur 300 abgerufen werden. Hierauf werden die Prozessdaten über das externe Datennetzwerk 127 an die Steuereinheit 123 zum Empfang übertragen.

Beispielsweise können die Ausgangsprozessdaten von der externen Dateninfrastruktur 300 zur Ansteuerung der Feldgeräte 125 bereitgestellt werden.

Bei dem externen Datennetzwerk 127 kann es sich beispielsweise um ein kabelgebundenes Netzwerk, beispielsweise um ein Ethernet-Netzwerk, oder um ein funkbasiertes Netzwerk handeln. Die externe Dateninfrastruktur 300 kann auf einem lokalen, in der Nähe des Automatisierungssystems 100 angeordneten Rechnersystem basieren. In diesem Fall kann das externe Datennetzwerk 300 beispielsweise ein lokales Netzwerk (LAN) umfassen oder daraus bestehen. Die externe Dateninfrastruktur 300 kann auch auf einem entfernten Rechnersystem basieren. Dabei kann das externe Datennetzwerk 127 auch das Internet umfassen, so dass die externe Dateninfrastruktur 300 im Prinzip weltweit angeordnet sein kann.

Der Austausch der Prozessdaten zwischen der Steuereinheit 123 und der externen Dateninfrastruktur 300 bzw. der Steuerinstanz 303 kann über einen gegenseitigen Austausch von Netzwerknachrichten erfolgen. Der Austausch der Netzwerknachrichten kann von einem Nachrichtenverteilermodul 301 koordiniert werden. Dabei müssen die Netzwerknachrichten nicht direkt zwischen der Steuerinstanz 303 bzw. einer die Prozessdaten empfangenden Steuereinheit ausgetauscht werden. Vielmehr können die Steuereinheit 123 und die Steuerinstanz 303 die Netzwerknachrichten mit den Prozessdaten jeweils mit dem Nachrichtenverteilermodul 301 austauschen, welches dann die Weiterleitung der Netzwerknachrichten an den jeweiligen Empfänger übernimmt.

Die Steuereinheiten 123 und die Steuerinstanz 303 werden also nicht direkt miteinander gekoppelt, sondern kommunizieren nur indirekt über das Nachrichtenverteilermodul 301 miteinander. Dies ermöglicht einen zeitlich und räumlich entkoppelten Betrieb der Steuereinheiten 123 als Sender der Netzwerknachrichten und den Empfängern der Netzwerknachrichten. Das Nachrichtenverteilermodul 301 kann dazu ausgebildet sein, einen plattform- und betriebssystemunabhängigen Austausch der Netzwerknachrichten zu ermöglichen.

Das Nachrichtenverteilermodul 301 kann eine Nachrichten-Warteschlange ("messagequeue") für die Netzwerknachrichten bereitstellen. Es kann auch einen sogenannten "message-broker" umfassen, welcher die Netzwerknachrichten validiert, umwandelt und/oder weiterleitet. Das Nachrichtenverteilermodul 301 kann als eine Softwareanwendung auf der externen Dateninfrastruktur 300 ausgeführt werden. Bei dem Nachrichtenverteilermodul 301 kann es sich beispielsweise um eine sogenannte nachrichtenorientierte Middleware handeln. Der Austausch der die Prozessdaten enthaltenden Netzwerknachrichten mit dem Nachrichtenverteilermodul 301 kann beispielsweise über das MQTT-Protokoll oder das AMQP-Protokoll erfolgen.

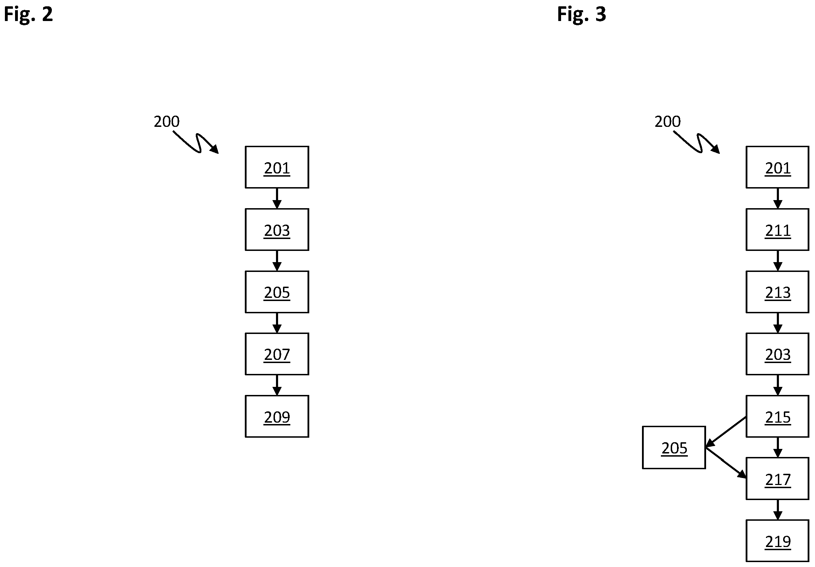

Fig. 2 zeigt ein Flussdiagramm eines Verfahrens 200 zum Betreiben eines Automatisierungssystems 100 gemäß einer Ausführungsform.

Das in Fig. 2 dargestellte Verfahren 200 zum Betreiben eines Automatisierungssystems 100 bezieht sich auf ein Automatisierungssystem 100 gemäß Fig. 1. Das Verfahren 200 soll jedoch nicht hierauf beschränkt sein. Einzelheiten des Automatisierungssystems 100 können von dem in Fig. 1 dargestellten Automatisierungssystem 100 abweichen.

Das Verfahren 200 zum Betreiben eines Automatisierungssystems 100 betrifft ein Automatisierungssystem 100 mit wenigstens einer ersten Steuereinheit 101 und einer zweiten Steuereinheit 103 zum Ausführen eines Automatisierungsprozesses und zum Steuern einer Mehrzahl Feldgeräten 125, und einer externen Dateninfrastruktur 300 mit einem Nachrichtenverteilermodul 301 zum Vermitteln einer Datenkommunikation zwischen Kommunikationsteilnehmern 121 eines Kommunikationsnetzwerks 119.

In der Ausführungsform in Fig. 2 umfasst das Verfahren 200 die folgenden Schritte:
Definieren eines ersten Kommunikationsnetzwerks 109 und Identifizieren der ersten Steuereinheit 101 und der zweiten Steuereinheit 103 als erste Kommunikationsteilnehmer 111 des ersten Kommunikationsnetzwerks 109 durch das Nachrichtenverteilermodul 301 in einem ersten Identifikationsschritt 201,
Aussenden einer ersten Netzwerknachricht im Rahmen einer Datenkommunikation zwischen den ersten Kommunikationsteilnehmern 111 des ersten Kommunikationsnetzwerks 109 durch die erste Steuereinheit 101 an das Nachrichtenverteilermodul 301 der externen Dateninfrastruktur 300 in einem ersten Sendeschritt 203,
Identifizieren der zweiten Steuereinheit 103 als den von der ersten Steuereinheit 101 adressierten ersten Kommunikationsteilnehmer 111 des ersten Kommunikationsnetzwerks 109 durch das Nachrichtenverteilermodul 301 in einem zweiten Identifikationsschritt 205,
Weiterleiten der von der ersten Steuereinheit 101 ausgesendeten ersten Netzwerknachricht an die zweite Steuereinheit 103 durch das Nachrichtenverteilermodul 301 in einem Weiterleitungsschritt 207, und
Empfangen der weitergeleiteten ersten Netzwerknachricht durch die zweite Steuereinheit 103 in einem Empfangsschritt 209.

Im ersten Identifikationsschritt 201 definiert das Nachrichtenverteilermodul 301 ein erstes Kommunikationsnetzwerk 109 und identifiziert automatisch die erste Steuereinheit 101 und die zweite Steuereinheit 103 als erste Kommunikationsteilnehmer 111 des ersten Kommunikationsnetzwerks 109. Als Message Broker ausgebildet erkennt das Nachrichtenverteilermodul 301 automatisch alle Komponenten beziehungsweise Steuereinheiten 123 des Automatisierungssystems 100. Anhand der dem Nachrichtenverteilermodul 301 ebenfalls bekannten Topic-Einteilungen der möglichen Netzwerknachrichten im Rahmen einer Datenkommunikation zwischen den Steuereinheiten 123 des Automatisierungssystems 100 ist das Nachrichtenverteilermodul 301 in der Lage, die bekannten Steuereinheiten 123 in entsprechenden Kommunikationsnetzwerken 119 zusammenzufassen, sodass die Steuereinheiten 123 in einem Kommunikationsnetzwerk 119 zusammengefasst sind, die Netzwerknachrichten mit identischen Topics als Adressaten abonniert haben.

Über die Definition der einzelnen Kommunikationsnetzwerke 119 und die Zuweisung der Kommunikationsteilnehmer 121 zu einzelnen Kommunikationsnetzwerken 119 kann das Nachrichtenverteilermodul 301 Zugangsrechte verteilen, die vorsehen, welcher der Kommunikationsteilnehmer 121 welche Netzwerknachrichten erhält beziehungsweise zu welchen Datenkommunikationen insbesondere zu welchen Kommunikationsnetzwerken 119 Zugang erhält.

Steuereinheiten 123, die vom Nachrichtenverteilermodul 301 erkannt werden, jedoch keine der bekannten Topics der möglichen Netzwerknachrichten abonniert haben, werden keinem der definierten Kommunikationsnetzwerke 119 zugeordnet. Derartige Steuereinheiten 123 sind somit von der Datenkommunikation mit weiteren Steuereinheiten 123 ausgenommen. In Fig. 1 entspricht die dritte Steuereinheit 113 einer solchen Steuereinheit, die keine Topics der Netzwerknachrichten des ersten Kommunikationsnetzwerks 109 abonniert hat und somit kein erster Kommunikationsteilnehmer 111 des ersten Kommunikationsnetzwerks 109 ist.

Ein derartiger Ausschluss von Steuereinheiten 123 aus definierten Kommunikationsnetzwerken 119 kann beispielsweise eintreten für Steuereinheiten 123, die kein Bestandteil des bestehenden Automatisierungssystems 100 sind. Derartige Steuereinheiten 123 können beispielsweise Bestandteile eines anderen Automatisierungssystems sein. Bei der Ausbildung der externen Dateninfrastruktur 300 als einem externen Cloud-Server kann dies insbesondere dann der Fall sein, wenn die weitere Steuereinheit ein Bestandteil eines weiteren Automatisierungssystems ist. In Fig. 1 kann die dritte Steuereinheit 113 insbesondere Bestandteil eines anderen Automatisierungssystems sein.

Nach Definition des ersten Kommunikationsnetzwerks 109 und der automatischen Identifikation der ersten Kommunikationsteilnehmer 111 sendet zur Datenkommunikation zwischen den ersten Kommunikationsteilnehmern 111 im ersten Kommunikationsnetzwerk 109 die erste Steuereinheit 101 im ersten Sendeschritt 203 ersten Netzwerknachrichten an das Nachrichtenverteilermodul 301. Die ausgesendeten ersten Netzwerknachrichten sind an die ersten Kommunikationsteilnehmer 111 des ersten Kommunikationsnetzwerks 109 adressiert.

Nach Empfang der ersten Netzwerknachrichten durch das Nachrichtenverteilermodul 301 identifiziert das Nachrichtenverteilermodul 301 den in der ausgesendeten ersten Netzwerknachricht adressierten ersten Kommunikationsteilnehmer 111 des ersten Kommunikationsnetzwerks 109. Dies kann insbesondere an der in der ausgesendeten ersten Netzwerknachricht enthaltenen Topic-Information entnommen werden. Innerhalb eines Kommunikationsnetzwerks 119 können durch ausgesendete ersten Netzwerknachrichten alle im Kommunikationsnetzwerk 119 enthaltenen Kommunikationsteilnehmer 121 adressiert sein. Alternativ können mit ausgesendeten ersten Netzwerknachrichten lediglich bestimmte Kommunikationsteilnehmer 121 eines Kommunikationsnetzwerks 119 adressiert sein.

Nach Identifikation des adressierten ersten Kommunikationsteilnehmers 111 im zweiten Identifikationsschritt 205 durch das Nachrichtenverteilermodul 301 leitet dieses die empfangene erste Netzwerknachricht an den adressierten ersten Kommunikationsteilnehmer 111 des ersten Kommunikationsnetzwerks 109 in einem Weiterleitungsschritt 207 weiter. Das Nachrichtenverteilermodul 301 fungiert in dieser Ausführungsform ausschließlich als ein Verteiler der durch die Kommunikationsteilnehmer 121 des jeweiligen Kommunikationsnetzwerks 119 ausgesendeten ersten Netzwerknachrichten.

In einem Empfangsschritt 209 empfängt der adressierte erste Kommunikationsteilnehmer 111 des ersten Kommunikationsnetzwerks 109 die von der ersten Steuereinheit 101 ausgesendete erste Netzwerknachricht, wodurch die angestrebte Datenkommunikation abgeschlossen ist.

In der vorliegend beschriebenen Ausführungsform, die lediglich eine erste Steuereinheit 101 und eine zweite Steuereinheit 103 als erste Kommunikationsteilnehmer 111 des ersten Kommunikationsnetzwerks 109 vorsieht, werden ausschließlich Netzwerknachrichten zwischen der ersten Steuereinheit 101 und der zweiten Steuereinheit 103 ausgetauscht. Alternativ kann ein Kommunikationsnetzwerk 119 eine Mehrzahl von Kommunikationsteilnehmern 121 aufweisen, die jeweils eingerichtet sind, Netzwerknachrichten an die weiteren Kommunikationsteilnehmer des Kommunikationsnetzwerks auszusenden und entsprechend an sie adressierte Netzwerknachrichten zu empfangen.

In der vorliegend beschriebenen Ausführungsform ist die externe Dateninfrastruktur 300 wenigstens aber das Nachrichtenverteilmodul 301 ein Kommunikationsteilnehmer 121 der jeweils definierten Kommunikationsnetzwerke 119.

Fig. 3 zeigt ein Flussdiagramm eines Verfahrens 200 zum Betreiben eines Automatisierungssystems 100 gemäß einer weiteren Ausführungsform.

Die in Fig. 3 dargestellte Ausführungsform des Verfahrens 200 baut auf den Verfahrensschritten des Verfahrens 200 in der in Fig. 2 gezeigten Ausführungsform auf. Der zu Fig. 2 dargelegte Verfahrensablauf des Verfahrens 200 wird im Folgenden nicht mehr erläutert.

Wie in der Ausführungsform in Fig. 2 wird auch in der vorliegenden Ausführungsform in Fig. 3 eine Datenkommunikation zwischen Kommunikationsteilnehmern 121 durch das Definieren eines ersten Kommunikationsnetzwerks 109 und das automatische Identifizieren der ersten Steuereinheit 101 und der zweiten Steuereinheit 103 als erste Kommunikationsteilnehmer 111 im ersten Identifikationsschritt 201 initiiert.

Darauffolgend werden von den ersten Feldgeräten 105 in einem Aufnahmeschritt 211 Eingangsprozessdaten aufgenommen, die einen Zustand des durch die erste Steuereinheit 101 gesteuerten Automatisierungsprozesses repräsentieren. Derartige Eingangsprozessdaten können Messwerte von Sensoren sein. In einem Übertragungsschritt 213 werden diese aufgenommenen Eingangsprozessdaten von den ersten Feldgeräten 105 an die erste Steuereinheit 101 übertragen. In der in Fig. 1 gezeigten Ausführungsform des Automatisierungssystems 100 erfolgt dies über das erste Bussystem 106 auf Basis eines entsprechenden Busprotokolls.

Die von der ersten Steuereinheit 101 empfangenen Prozessdaten werden darauffolgend im ersten Sendeschritt 203 durch die erste Steuereinheit 101 in einer ersten Netzwerknachricht ausgesendet.

Abweichend zu der Ausführungsform in Fig. 2 wird die durch die erste Steuereinheit 101 ausgesendete erste Netzwerknachricht von dem Nachrichtenverteilermodul 301 nicht direkt an den adressierten Kommunikationsteilnehmer weitergeleitet, sondern die vom Nachrichtenverteilermodul 301 empfangene erste Netzwerknachricht wird über das interne Datennetzwerk 129 der externen Dateninfrastruktur 300 an das Analysemodul 305 der Steuerinstanzen 303 weitergeleitet. In einem Analyseschritt 215 führt das Analysemodul 305 eine Datenanalyse der in der ersten Netzwerknachricht enthaltenen Prozessdaten der ersten Feldgeräte 105 durch. Die durchgeführte Datenanalyse kann an die Struktur der Prozessdaten angepasst sein und gemäß dem durch die Datenanalyse zu extrahierenden Informationsgehalt der aufgenommenen Prozessdaten variabel sein. Durch die durchgeführte Datenanalyse erzeugt das Analysemodul 305 analysierte Prozessdaten.

In einem zweiten Sendeschritt 217 verfasst das Nachrichtenverteilermodul 301 auf Basis der analysierten Prozessdaten eine zweite Netzwerknachricht und sendet diese an die erste Steuereinheit 101 und/oder an die zweite Steuereinheit 103 aus. Sind abweichend zu der hier diskutierten Ausführungsform mehr als zwei erste Kommunikationsteilnehmer im ersten Kommunikationsnetzwerk 109 zusammengefasst, kann das Nachrichtenverteilermodul 301 die zweite Netzwerknachricht an eine beliebige Anzahl von adressierten ersten Kommunikationsteilnehmern 111 aussenden. In diesem Fall kann das Nachrichtenverteilermodul 301 im oben beschriebenen zweiten Identifikationsschritt 205 die jeweilig adressierten ersten Kommunikationsteilnehmer 111 des ersten Kommunikationsnetzwerks 109 identifizieren. Nach Identifikation der adressierten ersten Kommunikationsteilnehmer 111 sendet das Nachrichtenverteilermodul 301 im zweiten Sendeschritt 217 die zweite Netzwerknachricht an die identifizierten ersten Kommunikationsteilnehmer 111 aus.

Nach Empfang der zweiten Netzwerknachricht durch die adressierten ersten Kommunikationsteilnehmer 111, in der vorliegenden Ausführungsform der ersten Steuereinheit 101 und/oder zweiten Steuereinheit 103, berücksichtigen die adressierten ersten Kommunikationsteilnehmer 111 die analysierten Prozessdaten der zweiten Netzwerknachricht zur Steuerung des Automatisierungsprozesses.

Für den Fall, dass die zweite Netzwerknachricht ausschließlich an die erste Steuereinheit 101 gesendet wird, kann durch das erfindungsgemäße Verfahren 200 ein Analyseprozess der aufgenommenen Prozessdaten der ersten Feldgeräte 105 an die externe Dateninfrastruktur 300 ausgelagert werden. Für den Fall, dass die zweite Netzwerknachricht an die zweite Steuereinheit 103 ausgesendet wird, kann eine Datenkommunikation auf Basis der analysierten Prozessdaten zwischen der ersten Steuereinheit 101 und der zweiten Steuereinheit 103 realisiert werden.

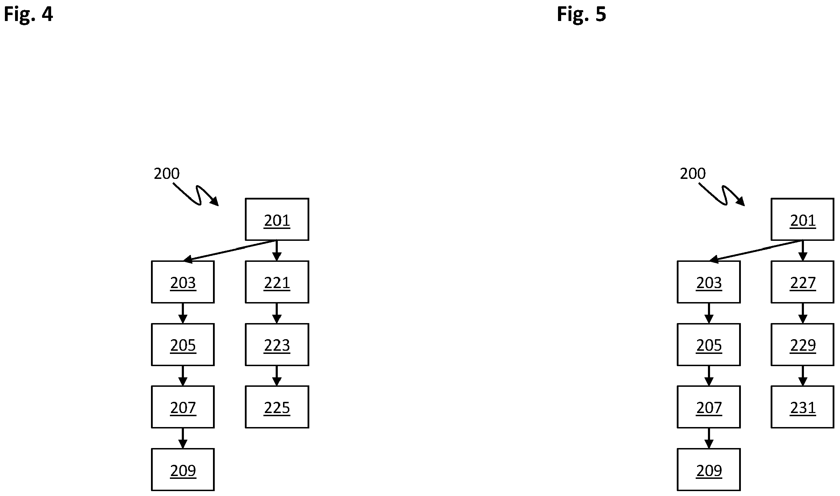

Fig. 4 zeigt ein Flussdiagramm eines Verfahrens 200 zum Betreiben eines Automatisierungssystems 100 gemäß einer weiteren Ausführungsform.

Die Ausführungsform in Fig. 4 basiert auf der Ausführungsform in Fig. 2 und umfasst alle Verfahrensschritte der Ausführungsform in Fig. 2. Diese Schritte werden sofern unverändert nicht erneut diskutiert.

Nach Definition des ersten Kommunikationsnetzwerks 109 und der automatischen Identifikation der ersten Steuereinheit 101 und der zweiten Steuereinheit 103 als erste Kommunikationsteilnehmer 111 im ersten Identifikationsschritt 201 wird in einem Generierungsschritt 221 durch das Entwicklungsmodul 307 der Steuerinstanz 303 der externen Dateninfrastruktur 300 ein Steuerprogramm zum Steuern der ersten Steuereinheit 101 und/oder der zweiten Steuereinheit 103 generiert. Ist das Entwicklungsmodul 307 als eine Programmierumgebung ausgebildet, so kann der Generierungsschritt 221 das Programmieren eines Steuerprogramms durch einen Nutzer des Entwicklungsmoduls 307 umfassen.

Nach erfolgreicher Generierung des Steuerprogramms durch das Entwicklungsmodul 307 wird das generierte Steuerprogramm über das interne Datennetzwerk 129 an das Nachrichtenverteilermodul 301 weitergeleitet. Darauf erstellt das Nachrichtenverteilermodul 301 auf Basis des generierten Steuerprogramms eine dritte Netzwerknachricht und sendet diese dritte Netzwerknachricht an die erste Steuereinheit 101 und/oder an die zweite Steuereinheit 103 als adressierte erste Kommunikationsteilnehmer 111 des ersten Kommunikationsnetzwerks 109 in einem dritten Sendeschritt 223 aus. Sollten entgegen der hier beschriebenen Ausführungsform im ersten Kommunikationsnetzwerk 109 eine Mehrzahl von ersten Kommunikationsteilnehmern 111 zusammengefasst sein, so kann das Nachrichtenverteilermodul 301 im dritten Sendeschritt 223 die generierte dritte Netzwerknachricht an eine Mehrzahl der ersten Kommunikationsteilnehmer 111 aussenden.

Hierzu identifiziert das Nachrichtenverteilermodul 301 die ersten Kommunikationsteilnehmer 111 des ersten Kommunikationsnetzwerks 109, für die das generierte Steuerprogramm bestimmt ist und adressiert die dritte Netzwerknachricht den identifizierten ersten Kommunikationsteilnehmern 111 entsprechend. Alternativ kann die dritte Netzwerknachricht an alle ersten Kommunikationsteilnehmer 111 gesendet werden. Alternativ kann ein weiteres Kommunikationsnetzwerk 119 mit Kommunikationsteilnehmern 121 definiert werden, an die die dritte Netzwerknachricht auszusenden ist.

Nach Empfang der dritten Netzwerknachricht durch die adressierten ersten Kommunikationsteilnehmer 111, in der vorliegenden Ausführungsform durch die erste Steuereinheit 101 und/oder die zweite Steuereinheit 103, führen die adressierten ersten Kommunikationsteilnehmer 111 das generierte Steuerprogramm der dritten Netzwerknachricht aus und steuern den jeweiligen Automatisierungsprozess auf Basis des generierten Steuerprogramms. Dies kann ein Installieren des generierten Steuerprogramms und ein Ersetzen eines ursprünglichen Steuerprogramms durch das generierte Steuerprogramm durch die jeweils adressierten ersten Kommunikationsteilnehmer 111, in der vorliegenden Ausführungsform durch die erste Steuereinheit 101 und/oder die zweite Steuereinheit 103, umfassen.

Die hier beschriebene Generierung eines Steuerprogramms durch das Entwicklungsmodul 307 kann parallel zu einer Datenkommunikation zwischen ersten Kommunikationsteilnehmern 111 gemäß der zu Fig. 2 beschriebenen Ausführungsform durchgeführt werden.

Parallel kann eine Datenkommunikation gemäß der Ausführungsformen in Fig. 2 oder Fig. 3 durchgeführt werden.

Fig. 5 zeigt ein Flussdiagramm eines Verfahrens 200 zum Betreiben eines Automatisierungssystems 100 gemäß einer weiteren Ausführungsform.

Die Ausführungsform in Fig. 5 basiert auf der Ausführungsform in Fig. 2 und umfasst alle Verfahrensschritte der Ausführungsform in Fig. 2. Diese Schritte werden sofern unverändert nicht erneut diskutiert.

Nach erfolgreicher Definition des ersten Kommunikationsnetzwerks 109 und automatischer Identifikation der ersten Steuereinheit 101 und der zweiten Steuereinheit 103 als erste Kommunikationsteilnehmer 111 im ersten Identifikationsschritt 201 wird in einem zweiten Ausführungsschritt 227 durch das Ausführungsmodul 309 der Steuerinstanz 303 ein Steuerprogramm ausgeführt und Ausgangsprozessdaten erzeugt.

Die Ausgangsprozessdaten umfassen Steueranweisungen an die Feldgeräte 125 zum Steuern des Automatisierungsprozesses. Die generierten Steuerungsanweisungen der Ausgangsprozessdaten können Steueranweisungen entsprechen, die von der ersten Steuereinheit 101 oder der zweiten Steuereinheit 103 zum Steuern der ersten Feldgeräte 105 oder der zweiten Feldgeräte 107 entsprechen. Die generierten Steuerungsanweisungen der Ausgangsprozessdaten können damit direkt auf die ersten Feldgeräte 105 oder die zweiten Feldgeräte 107 zum Steuern des Automatisierungsprozesses angewendet werden. Alternativ können die generierten Steueranweisungen der Ausgangsprozessdaten Steueranweisungen an die erste Steuereinheit 101 oder die zweite Steuereinheit 103 sein, sodass zum Steuern der ersten Feldgeräte 105 durch die erste Steuereinheit 101 oder zum Steuern der zweiten Feldgeräte 107 durch die zweite Steuereinheit 103 eine zusätzliche Umwandlung der generierten Steueranweisungen der Ausgangsprozessdaten durch die erste Steuereinheit 101 oder die zweite Steuereinheit 103 notwendig ist und ein direktes Ansteuern der ersten Feldgeräte 105 oder der zweiten Feldgeräte 107 durch die generierten Steueranweisungen der Ausgangsprozessdaten nicht möglich ist.

Nach Ausführen des Steuerprogramms und Generieren der Ausgangsprozessdaten durch das Ausführungsmodul 309 werden die generierten Ausgangsprozessdaten über das interne Datennetzwerk 129 an das Nachrichtenverteilermodul 301 übermittelt. Hierauf folgend generiert das Nachrichtenverteilermodul 301 auf Basis der Ausgangsprozessdaten eine vierte Netzwerknachricht und sendet die vierte Netzwerknachricht an die erste Steuereinheit 101 und/oder die zweite Steuereinheit 103 in einem vierten Sendeschritt 229 aus. Sollte im ersten Kommunikationsnetzwerk 109 eine Mehrzahl von ersten Kommunikationsteilnehmern 111 zusammengefasst sein, so kann das Nachrichtenverteilermodul 301 die vierte Netzwerknachricht an eine Mehrzahl von ersten Kommunikationsteilnehmern 111 aussenden. Hierzu kann das Nachrichtenverteilermodul 301 die ersten Kommunikationsteilnehmer 111 identifizieren, für die die generierten Ausgangsprozessdaten der vierten Netzwerknachricht bestimmt sind.

Nach Empfang der vierten Netzwerknachricht durch die adressierten ersten Kommunikationsteilnehmer 111, in der vorliegenden Ausführungsform durch die erste Steuereinheit 101 und/oder die zweite Steuereinheit 103, führt die erste Steuereinheit 101 und/oder die zweite Steuereinheit 103 die entsprechenden Steuerungsanweisungen der generierten Ausgangsprozessdaten aus und beeinflusst den zu steuernden Automatisierungsprozess auf Basis der generierten Ausgangsprozessdaten. Somit kann eine Steuerung des Automatisierungssystems 100 beziehungsweise des durch das Automatisierungssystem 100 ausgeführten Automatisierungsprozesses durch die in der externen Dateninfrastruktur 300 angeordnete Steuerinstanz 303 erzielt werden.

Das erfindungsgemäße Verfahren 200 wurde in den Ausführungsformen von Fig. 2, Fig. 3 und Fig. 4 mit Bezug auf das Automatisierungssystem 100 gemäß Fig. 1 beschrieben. Das erfindungsgemäße Verfahren 200 soll aber nicht auf das in Fig. 1 gezeigte Automatisierungssystem 100 beschränkt sein. Vielmehr kann das Verfahren 200 auf beliebige Automatisierungssysteme 100 insbesondere mit einer Vielzahl von Steuereinheiten 123 beziehungsweise einer Vielzahl von weiteren Kommunikationsteilnehmern, die beispielsweise als Computer von Leitebenen der Automatisierungssysteme 100 oder andere Datenverarbeitungseinheiten 139 ausgebildet sind, angewendet werden.

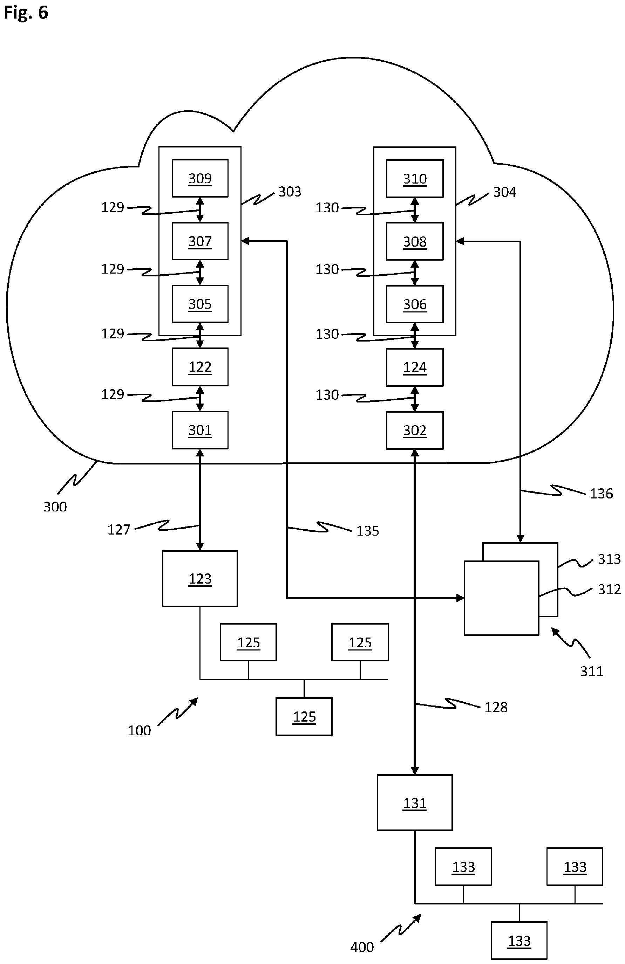

Fig. 6 zeigt eine schematische Darstellung einer Dateninfrastruktur 300 gemäß einer Ausführungsform.

In Fig. 6 ist die externe Dateninfrastruktur 300 in der Ausführungsform eines externen Cloud-Servers dargestellt. Die externe Dateninfrastruktur 300 umfasst das Nachrichtenverteilermodul 301 sowie die Steuerinstanz 303 inklusive des Analysemoduls 305, des Entwicklungsmoduls 307 und des Ausführungsmoduls 309. Ferner umfasst die externe Dateninfrastruktur 300 die Routing-Einheit 122. Die einzelnen Einheiten und Module sind über das interne Datennetzwerk 129 miteinander verbunden. Über das externe Datennetzwerk 127 ist das Nachrichtenverteilermodul 301 mit einer Steuereinheit 123 mit Feldgeräten 125 verbunden.

Darüber hinaus umfasst die externe Dateninfrastruktur 300 in der gezeigten Ausführungsform ein weiteres Nachrichtenverteilermodul 302 sowie eine weitere Steuerinstanz 304 inklusive eines weiteren Analysemoduls 306, eines weiteren Entwicklungsmoduls 308 und eines weiteren Ausführungsmoduls 310. Darüber hinaus umfasst die externe Dateninfrastruktur 300 eine weitere Routing-Einheit 124. Die Module und Einheiten sind ebenfalls über ein weiteres internes Datennetzwerk 130 miteinander verbunden. Über ein weiteres externes Datennetzwerk 128 ist das weitere Nachrichtenverteilermodul 302 mit einer weiteren Steuereinheit 131 mit weiteren Feldgeräten 133 verbunden.

Das interne Datennetzwerk 129 und das weitere interne Datennetzwerk 130 können voneinander getrennt ausgebildet sein, sodass eine Datenkommunikation zwischen der Steuerinstanz 303 und der weiteren Steuerinstanz 304 unterbunden ist. Alternativ können das interne Datennetzwerk 129 und das weitere interne Datennetzwerk 130 derart miteinander verbunden sein, dass eine Datenkommunikation zwischen der Steuerinstanz 303 und der weiteren Steuerinstanz 304 ermöglicht ist.

In der in Fig. 6 gezeigten Ausführungsform sind die Steuereinheit 123 mit den Feldgeräten 125 und die weitere Steuereinheit 131 mit den weiteren Feldgeräten 133 keine Bestandteile eines zusammenhängenden Automatisierungssystems 100. Stattdessen ist in Fig. 6 der Fall dargestellt, dass die Steuereinheit 123 mit den Feldgeräten 125 ein Bestandteil des Automatisierungssystems 100 ist, während die weitere Steuereinheit 131 mit den weiten Feldgeräten 133 ein Bestandteil eines weiteren Automatisierungssystems 400 sind. Das Automatisierungssystem 100 und das weitere Automatisierungssystem 400 können vollständig voneinander getrennte unabhängige Automatisierungssysteme sein. Beispielsweise können das Automatisierungssystem 100 und das weitere Automatisierungssystem 400 unterschiedlichen Betreibern zugeordnet sein und keinen Bezug zueinander haben. Alternativ können das Automatisierungssystem 100 und das weitere Automatisierungssystem 400 einem gemeinsamen Betreiber zugeordnet sein aber beispielsweise an unterschiedlichen Standorten voneinander unabhängig betrieben werden.

In der in Fig. 6 gezeigten Ausführungsform ist die externe Dateninfrastruktur 300 ein externer Cloud-Server ausgebildet, der von verschiedenen Nutzern zur Organisation beziehungsweise Steuerung von Automatisierungsprozessen ihrer Automatisierungssysteme100 und/oder weiterer Automatisierungssysteme 400 genutzt werden kann.

In der Ausführungsform in Fig. 6 umfasst die externe Dateninfrastruktur 300 ferner ein Eingabemodul 311. Das Eingabemodul 311 ist mit der Steuerinstanz 303 über eine externe Datenverbindung 135 und mit der weiteren Steuerinstanz 304 über eine weitere externe Datenverbindung 136 verbunden. Das Eingabemodul 311 ermöglicht einem Nutzer, sich in die externe Dateninfrastruktur 300 einzuwählen und stellt dem Nutzer einen Zugang zur Steuerinstanz 303 oder zur weiteren Steuerinstanz 304 bereit.

Wählt der Nutzer sich über das Eingabemodul 311 beispielsweise in die Steuerinstanz 303 ein, so ist das Eingabemodul 311 in der Lage, entsprechende Eingabeaufforderungen an das Analysemodul 305, das Entwicklungsmodul 307 oder das Ausführungsmodul 309 zu machen. Hierüber kann der Nutzer beispielsweise den Analyseprozess des Analysemoduls 305 individuell variieren und steuern. Ferner kann der Nutzer über das Entwicklungsmodul 307, beispielsweise wenn dieses als eine Programmierumgebung ausgebildet ist, ein Steuerprogramm beziehungsweise weitere Softwaremodule in einem entsprechenden Programmiervorgang erstellen. Darüber hinaus kann der Nutzer in die Steuerung des Automatisierungsprozesses beziehungsweise der Steuereinheit 123 durch eine entsprechende Eingabeaufforderung an das Ausführungsmodul 309 Einsicht erhalten, indem dem Nutzer entsprechende Prozessdaten beziehungsweise analysierte Prozessdaten bereitgestellt werden. Darüber hinaus kann der Nutzer über entsprechende Eingabeaufforderungen an das Ausführungsmodul 309 aktiv in die Steuerung des Automatisierungsprozesses einwirken und diesen beeinflussen, beispielsweise durch das Starten oder Beenden entsprechender Steuerungsprogramme.

Gleiches gilt für die weitere Steuerinstanz 304, über die ein Nutzer mittels des Eingabemoduls 311 einen Zugang zu der Steuerung des Automatisierungsprozesses des weiteren Automatisierungssystems 400 ermöglicht ist.

In der in Fig. 6 gezeigten Ausführungsform sind das Automatisierungssystem 100 und das weitere Automatisierungssystem 400 voneinander getrennte Automatisierungssysteme. Dies bedeutet, dass für einen Zugang zu der Steuerinstanz 303 und für einen Zugang zu der weiteren Steuerinstanz 304 zwei unterschiedliche und voneinander getrennte Zugangsinstanzen erstellt werden müssen. Dies ist über die externe Datenverbindung 135 und die weitere externe Datenverbindung 136 dargestellt. In der in Fig. 6 gezeigten Ausführungsform umfasst das Eingabemodul 311 eine erste Zugangsinstanz 312, die über die externe Datenverbindung 135 mit der Steuerinstanz 303 verbunden ist, und eine zweite Zugangsinstanz 313, die über die weitere externe Datenverbindung 136 mit der weiteren Steuerinstanz 304 verbunden ist. Beide Zugangsinstanzen sind explizit voneinander separiert, sodass gewährleistet ist, dass über die erste Zugangsinstanz 312 ausschließlich Zugang zu der Steuerinstanz 303 und damit zu dem Automatisierungssystem 100 ermöglicht ist, während über die zweite Zugangsinstanz 313 ausschließlich Zugang zu der weiteren Steuerinstanz 304 und damit zu dem weiteren Automatisierungssystem 400 ermöglicht ist.

In der in Fig. 6 gezeigten Ausführungsform ist das Eingabemodul 311 als eine Website der externen Dateninfrastruktur 300 ausgebildet. Die Zugangsinstanzen können vorliegend als ein User-Account, der auf der Website beziehungsweise dem Eingabemodul 311 eingerichtet werden kann, interpretiert werden.

Die externe Datenverbindung 135 und die weitere externe Datenverbindung 136 können in diesem Zusammenhang eine Internetverbindung sein, die über eine entsprechende Verschlüsselung einen privaten und gesicherten Zugang zu den User-Accounts und den entsprechenden Steuerinstanzen beziehungsweise Automatisierungssystemen garantiert.

Das externe Datennetzwerk 127 und das weitere externe Datennetzwerk 128 können ebenfalls eine Internetverbindung sein und eine Datenkommunikation zwischen den Nachrichtenverteilermodulen und den Steuereinheiten kann auf Basis eines MQTT-Protokolls durchgeführt werden. Das interne Datennetzwerk 129 kann hingegen als ein Datenbussystem ausgebildet sein, und die Datenkommunikation zwischen den Modulen und Einheiten der externen Dateninfrastruktur 300 kann auf Basis eines entsprechenden busbasierenden Kommunikationsprotokolls durchgeführt werden.

Alternativ zu der in Fig. 6 gezeigten Ausführungsform kann die externe Dateninfrastruktur 300 eine Mehrzahl von Steuerinstanzen 303 inklusive der gezeigten Module aufweisen, die jeweils einer Mehrzahl unabhängiger Automatisierungssysteme 100, 400 zugeordnet sind.

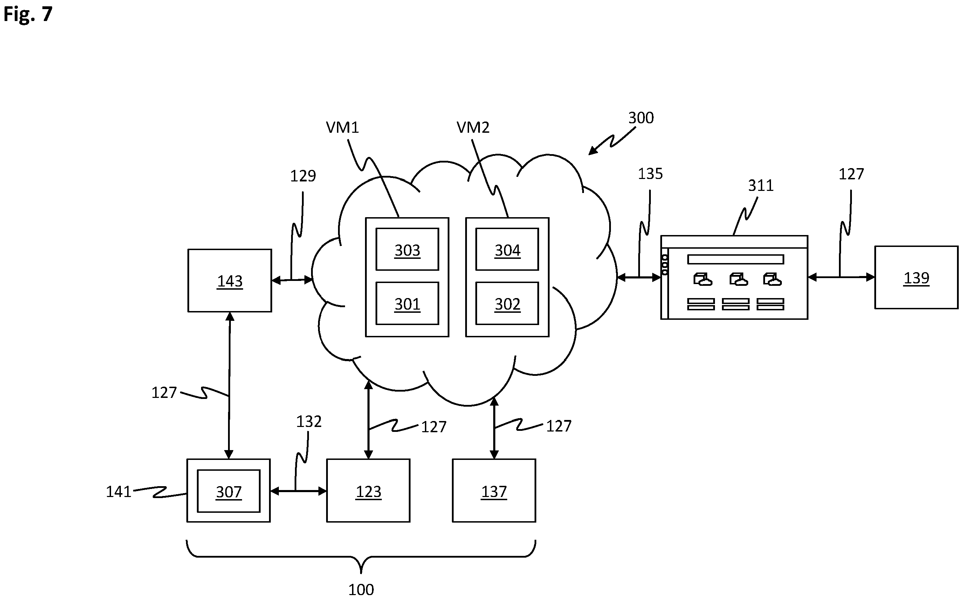

Fig. 7 zeigt eine schematische Darstellung einer Dateninfrastruktur 300 gemäß einer weiteren Ausführungsform.

In der Ausführungsform in Fig. 7 ist die externe Dateninfrastruktur 300 wiederum als ein Cloud-Server ausgebildet. Die externe Dateninfrastruktur 300 umfasst eine Steuerinstanz 303 und ein Nachrichtenverteilermodul 301. Gemäß Fig. 6 umfasst die Steuerinstanz 303 das Analysemodul 305, das Entwicklungsmodul 307 und das Ausführungsmodul 309. Die Steuerinstanz 303 und das Nachrichtenverteilermodul 301 sind in Fig. 7 in einer ersten virtuellen Maschine VM1 installiert. Darüber hinaus umfasst die externe Dateninfrastruktur 300 eine zweite virtuelle Maschine VM2, in der das weitere Nachrichtenverteilermodul 302 und die weitere Steuerinstanz 304 installiert sind.

Die externe Dateninfrastruktur 300 ist über das externe Datennetzwerk 127 mit der Steuereinheit 123 verbunden. Die Steuereinheit 123 umfasst die Feldgeräte 125, die in Fig. 7 nicht dargestellt sind. Die externe Dateninfrastruktur 300 ist ferner über das externe Datennetzwerk 127 mit einem Buskoppler 137 des Automatisierungssystems 100 verbunden.

Die Steuereinheit 123 ist ferner über eine interne Datenverbindung 132 mit einer weiteren Datenverarbeitungseinheit 141 verbunden, auf der ein Entwicklungsmodul 307 installiert ist. Die weitere Datenverarbeitungseinheit 141 kann eine Datenverarbeitungseinheit einer Leitebene des Automatisierungssystems 100 sein.

Die externe Dateninfrastruktur 300 weist ferner ein Eingabemodul 311 auf, das über die externe Datenverbindung 135 mit der externen Dateninfrastruktur 300 verbunden ist.

Das Eingabemodul 311 ist ferner über das externe Datennetzwerk 127 mit einer Datenverarbeitungseinheit 139 verbunden.

In der Ausführungsform in Fig. 7 ist das Eingabemodul 311 als eine Website der externen Dateninfrastruktur 300 ausgebildet. Die Datenverarbeitungseinheit 139 ist in der vorliegenden Ausführungsform ein Mobilgerät. Das externe Datennetzwerk 127 ist in der vorliegenden Ausführungsform eine Internetverbindung.

Ein Nutzer kann somit unter Verwendung der Datenverarbeitungseinheit 139 beziehungsweise des Mobilgeräts und einer bestehenden Internetverbindung in Form des externen Datennetzwerks 127 eine Verbindung zu dem als Website ausgebildeten Eingabemodul 311 herstellen. Zum Herstellen der Internetverbindung kann beispielsweise das Transmission Control Protokoll TCP angewendet werden. Auf der Website des Eingabemoduls 311 kann der Nutzer eine Zugangsinstanz in Form eines Nutzer-Accounts anlegen und somit einen Zugang zu der externen Dateninfrastruktur 300 herstellen. Die Verbindung über die Zugangsinstanz des Eingabemoduls 311 mit der externen Dateninfrastruktur 300 kann über die externe Datenverbindung 135 hergestellt werden. Die externe Datenverbindung 135 kann ebenfalls über eine Internetverbindung realisiert werden. Insbesondere kann die externe Datenverbindung 135 über das Remote Desktop Protocol RDP realisiert sein. Über die Zugangsinstanz des Eingabemoduls 311 und die externe Datenverbindung 135 kann der Nutzer somit einen Zugang zu der ersten virtuellen Maschine VM1 und/oder der zweiten virtuellen Maschine VM2 und den darauf installierten Modulen herstellen. Über entsprechende Eingabeaufforderungen, die der Nutzer auf seinem Mobilgerät eingibt, kann dieser somit die entsprechenden Module der Steuerinstanz 303 und/oder weiteren Steuerinstanz 304 bedienen.

Beispielsweise kann der Nutzer über sein Mobilgerät und die aufgerufene Website des Eingabemoduls 311 das Entwicklungsmodul 307 der Steuerinstanz 303 der ersten virtuellen Maschine VM1 aufrufen und die Programmierung eines Steuerprogramms oder eines weiteren Softwaremoduls innerhalb des Entwicklungsmoduls 307 vornehmen.

In der Ausführungsform in Fig. 7 ist neben dem Entwicklungsmodul 307 der Steuerinstanz 303 der ersten virtuellen Maschine VM1 ein Entwicklungsmodul 307 in der weiteren Datenverarbeitungseinheit 141 installiert. Dies ermöglicht dem Nutzer, ein Entwicklungsprojekt, das dieser über sein Mobilgerät und die aufgerufene Website des Eingabemoduls 311 in dem Entwicklungsmodul 307 der Steuerinstanz 303 der ersten virtuellen Maschine VM1 zum Erstellen eines Steuerprogramms oder eines weiteren Softwaremoduls begonnen hat, über das externe Datennetzwerk 127, über das die weitere Datenverarbeitungseinheit 141 mit der externen Dateninfrastruktur 300 verbunden ist, auf die weitere Datenverarbeitungseinheit 141 herunterzuladen und das Entwicklungsprojekt in dem Entwicklungsmodul 307 der weiteren Datenverarbeitungseinheit 141 weiterzubearbeiten.

Der Nutzer kann somit ein Entwicklungsprojekt über die Website des Eingabemoduls 311 in der ersten virtuellen Maschine VM1 oder auch einer weiteren Datenverarbeitungseinheit 141, insbesondere einer weiteren Datenverarbeitungseinheit 141 des Automatisierungssystems 100 bearbeiten. Die weitere Datenverarbeitungseinheit 141 kann beispielsweise ein Computer einer Leitebene oder Steuerebene des Automatisierungssystems 100 sein.

Die externe Dateninfrastruktur 300 weist ferner eine Source-Control-Einheit 143 auf, über die Änderungen der bearbeiteten Entwicklungsprojekte protokolliert werden können. Der Nutzer kann das fertiggestellte Entwicklungsprojekt beziehungsweise das programmierte Steuerprogramm oder das Softwaremodul nach Fertigstellung in die externe Dateninfrastruktur 300 hochladen und durch die erste virtuelle Maschine VM1 ausführen oder in der weiteren Datenverarbeitungseinheit 141 ausführen beziehungsweise über die interne Datenverbindung 132 an die Steuereinheit 123 weiterleiten und das Steuerprogramm beziehungsweise das Softwaremodul in der Steuereinheit 123 ausführen.

Die Steuereinheit 123 sowie der Buskoppler 137 sind über das externe Datennetzwerk 127 mit der externen Dateninfrastruktur 300 verbunden und in der Lage, eine Datenkommunikation gemäß dem Verfahren 200 durchzuführen. Die Datenkommunikation kann auf Basis des Transmission Control Protokoll TCP durchgeführt werden. In der Ausführungsform in Fig. 7 ist neben einer Datenkommunikation zwischen der externen Dateninfrastruktur 300 und der Steuereinheit 123, wie dies bereits in der Beschreibung zu den vorangegangenen Figuren 1 bis 6 dokumentiert ist, eine Datenkommunikation zwischen der externen Dateninfrastruktur 300 und einem Buskoppler 137 des Automatisierungssystems 100 ermöglicht. Ein derartiger Buskoppler 137 kann vorliegend als ein Kommunikationsteilnehmer 121 eines entsprechenden Kommunikationsnetzwerks 119 interpretiert werden. Das Verfahren 200 kann zwischen einer Steuereinheit 123 und einem Buskoppler 137 als Kommunikationsteilnehmer 121 eines Kommunikationsnetzwerks 119 analog durchgeführt werden.

Eine Datenübertragung zwischen der Source-Control-Einheit 143 und einer virtuellen Maschine der externen Dateninfrastruktur 300 kann über die Softwaremodule Put/Commit durchgeführt werden. Eine Datenübertragung zwischen der Source-Control-Einheit 143 und der weiteren Datenverarbeitungseinheit 141 kann über das Softwaremodul GIT durchgeführt werden.

Alternativ zu der in Fig. 7 gezeigten Ausführungsform, in der in der ersten virtuellen Maschine VM1 die Steuerinstanz 303 und in der zweiten virtuellen Maschine VM2 die weitere Steuerinstanz 304 installiert ist, können auf einer Mehrzahl von virtuellen Maschinen identische Steuerinstanzen installiert sein. Alternativ können auf verschiedenen virtuellen Maschinen einzelne Module der Steuerinstanzen installiert sein. Jede der auf der externen Dateninfrastruktur 300 angeordneten virtuellen Maschine kann als eine eigenständige Steuereinheit 123 eines Automatisierungssystems 100 fungieren und alle Funktionen einer Steuereinheit 123 aufweisen.

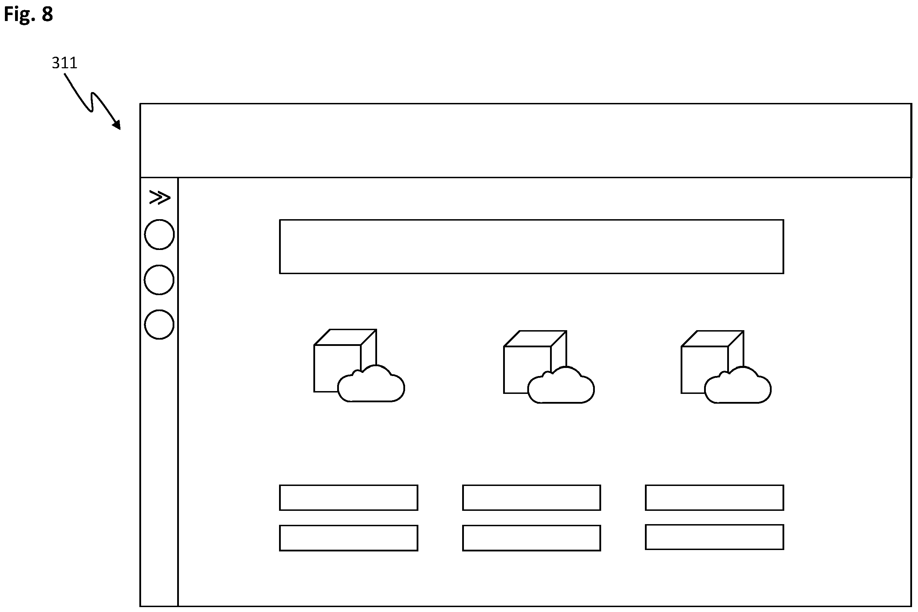

Fig. 8 zeigt eine schematische Darstellung eines Eingabemoduls 311 gemäß einer Ausführungsform.

In Fig. 8 ist das Eingabemodul 311 als eine Website der externen Dateninfrastruktur 300 ausgebildet. Nach Erstellen einer Zugangsinstanz durch einen Nutzer kann dieser auf verschiedene virtuelle Maschinen, die auf der externen Dateninfrastruktur 300 installiert sind, zugreifen. In der in Fig. 8 dargestellten Ausführungsform kann der Nutzer auf eine erste virtuelle Maschine VM1, eine zweite virtuelle Maschine VM2 und eine dritte virtuelle Maschine VM3 zugreifen. Die einzelnen virtuellen Maschinen können, wie in Bezug auf Fig. 7 erwähnt, verschiedene Module zur Steuerung eines Automatisierungssystems 100 aufweisen. Durch entsprechende Eingabeaufforderungen an die jeweiligen Module der virtuellen Maschinen kann der Nutzer, wie oben dargelegt, verschiedene Bereiche einer Steuerung eines Automatisierungssystems 100 beeinflussen. Wie oben dargelegt, kann der Nutzer dieses von einem beliebigen mit Internetzugang versehenen Computer beziehungsweise Mobilgerät aus durchführen. Der Nutzer ist somit in der Lage, sich von einem beliebigen Ort aus über das als Website ausgebildete Eingabemodul 311 in die als Cloud-Server ausgebildete externe Dateninfrastruktur 300 einzuwählen und somit den Steuerungsverlauf des Automatisierungssystems 100 beziehungsweise verschiedener Automatisierungssysteme zu beobachten beziehungsweise durch entsprechende Eingabeaufforderung an die jeweiligen Module einer Steuerinstanz 303 aktiv in die Steuerung des Automatisierungssystems 100 beziehungsweise einer Mehrzahl von Automatisierungssystemen einzugreifen.

### Bezugszeichenliste

- 100: Automatisierungssystem
- 101: erste Steuereinheit
- 103: zweite Steuereinheit
- 105: erstes Feldgerät
- 106: erstes Bussystem
- 107: zweites Feldgerät
- 109: erstes Kommunikationsnetzwerk
- 111: erster Kommunikationsteilnehmer
- 112: zweites Bussystem
- 113: dritte Steuereinheit
- 114: drittes Feldgerät
- 115: zweites Kommunikationsnetzwerk
- 117: zweiter Kommunikationsteilnehmer
- 118: drittes Bussystem
- 119: Kommunikationsnetzwerk
- 121: Kommunikationsteilnehmer
- 122: Routing-Einheit
- 123: Steuereinheit
- 124: weitere Routing-Einheit
- 125: Feldgerät
- 127: externes Datennetzwerk
- 128: weiteres externes Datennetzwerk
- 129: internes Datennetzwerk
- 130: weiteres internes Datennetzwerk
- 131: weitere Steuereinheit
- 132: interne Datenverbindung
- 133: weiteres Feldgerät
- 135: externe Datenverbindung
- 136: weitere externe Datenverbindung
- 137: Buskoppler
- 139: Datenverarbeitungseinheit
- 141: weitere Datenverarbeitungseinheit
- 143: Source-Control-Einheit

- 200: Verfahren zum Betreiben eines Automatisierungssystems
- 201: erster Identifikationsschritt
- 203: erster Sendeschritt
- 205: zweiter Identifikationsschritt
- 207: Weiterleitungsschritt
- 209: Empfangsschritt
- 211: Aufnahmeschritt
- 213: Übertragungsschritt
- 215: Analyseschritt
- 217: zweiter Sendeschritt
- 219: Beeinflussungsschritt
- 221: Generierungsschritt
- 223: dritter Sendeschritt
- 225: erster Ausführungsschritt
- 227: zweiter Ausführungsschritt
- 229: vierter Sendeschritt
- 231: Steuerschritt

- 300: Dateninfrastruktur
- 301: Nachrichtenverteilermodul
- 302: weiteres Nachrichtenverteilermodul
- 303: Steuerinstanz
- 304: weitere Steuerinstanz
- 305: Analysemodul
- 306: weiteres Analysemodul
- 307: Entwicklungsmodul
- 308: weiteres Entwicklungsmodul
- 309: Ausführungsmodul
- 310: weiteres Ausführungsmodul
- 311: Eingabemodul
- 312: erste Zugangsinstanz
- 313: zweite Zugangsinstanz

- 400: weiteres Automatisierungssystem

- VM1: erste virtuelle Maschine
- VM2: zweite virtuelle Maschine
- VM3: dritte virtuelle Maschine

## Patentansprüche

1. Verfahren (200) zum Betreiben eines Automatisierungssystems (100) mit einer ersten Steuereinheit (101) und zumindest einer zweiten Steuereinheit (103) und wenigstens einer dritten Steuereinheit (113) zum Ausführen mindestens eines Automatisierungsprozesses und zum Steuern einer Mehrzahl von Feldgeräten (125), und einer externen Dateninfrastruktur (300) mit einem Nachrichtenverteilermodul (301) zum Vermitteln einer Datenkommunikation zwischen Kommunikationsteilnehmern (121) eines Kommunikationsnetzwerks (109, 115), umfassend die folgenden Schritte:
Definieren eines ersten Kommunikationsnetzwerks (109), Erkennen der Steuereinheiten (101, 103) des Automatisierungssystems (100), Zuordnen der ersten Steuereinheit (101) und der zweiten Steuereinheit (103) zum ersten Kommunikationsnetzwerk (109) und Identifizieren der ersten Steuereinheit (101) und der zweiten Steuereinheit (103) als erste Kommunikationsteilnehmer (111) des ersten Kommunikationsnetzwerks (109) durch das Nachrichtenverteilermodul (301) in einem ersten Identifikationsschritt (201),
Aussenden einer ersten Netzwerknachricht im Rahmen einer Datenkommunikation zwischen den ersten Kommunikationsteilnehmern (111) des ersten Kommunikationsnetzwerks (109) durch die erste Steuereinheit (101) an das Nachrichtenverteilermodul (301) der externen Dateninfrastruktur (300) in einem ersten Sendeschritt (203),
Identifizieren der zweiten Steuereinheit (103) als den von der ersten Steuereinheit (101) adressierten ersten Kommunikationsteilnehmer (111) des ersten Kommunikationsnetzwerks (109) durch das Nachrichtenverteilermodul (301) in einem zweiten Identifikationsschritt (205),
Weiterleiten der von der ersten Steuereinheit (101) ausgesendeten ersten Netzwerknachricht an die zweite Steuereinheit (103) durch das Nachrichtenverteilermodul (301) in einem Weiterleitungsschritt (207),
Empfangen der weitergeleiteten ersten Netzwerknachricht durch die zweite Steuereinheit (103) in einem Empfangsschritt (209), und
Definieren eines zweiten Kommunikationsnetzwerks (115) und Identifizieren der dritten Steuereinheit (113) und der ersten Steuereinheit (101) und/oder der zweiten Steuereinheit (103) als zweite Kommunikationsteilnehmer (117) des zweiten Kommunikationsnetzwerks (115) durch das Nachrichtenverteilermodul (301) in einem dritten Identifikationsschritt, wobei eine Datenkommunikation ausschließlich zwischen ersten Kommunikationsteilnehmern (111) des ersten Kommunikationsnetzwerks (109) oder zwischen zweiten Kommunikationsteilnehmern (117) des zweiten Kommunikationsnetzwerks (115) erfolgt.

2. Verfahren (200) nach Anspruch 1, ferner umfassend:
Aufnehmen von Eingangsprozessdaten, die einen Zustand des durch das Automatisierungssystem (100) ausgeführten Automatisierungsprozesses repräsentieren, in den Feldgeräten (125) in einem Aufnahmeschritt (211),
Übertragen der Eingangsprozessdaten als Prozessdaten von den Feldgeräten (125) an die erste Steuereinheit (101) im Rahmen eines Austauschs von Prozessdaten in einem Übertragungsschritt (213), und
Aussenden der Prozessdaten in der ersten Netzwerknachricht im Rahmen der Datenkommunikation innerhalb des ersten Kommunikationsnetzwerks (109) durch die erste Steuereinheit (101) im ersten Sendeschritt (203).

3. Verfahren (200) nach Anspruch 2,
wobei die externe Dateninfrastruktur (300) ferner eine Steuerinstanz (303) mit einem Analysemodul (305) umfasst, das eingerichtet ist, Prozessdaten der Feldgeräte (125) gemäß vorbestimmter Analysevorschriften zu analysieren, umfassend:
Analysieren der Prozessdaten der durch das Nachrichtenverteilermodul (301) empfangenen ersten Netzwerknachricht durch das Analysemodul (305) in einem Analyseschritt (215),
Aussenden der analysierten Prozessdaten in einer zweiten Netzwerknachricht an die erste Steuereinheit (101) und/oder die zweite Steuereinheit (103) durch das Nachrichtenverteilermodul (301) im Rahmen der Datenkommunikation innerhalb des ersten Kommunikationsnetzwerks (109) in einem zweiten Sendeschritt (217), und
Beeinflussen des Automatisierungsprozesses durch die erste Steuereinheit (101) und/oder die zweite Steuereinheit (103) auf Basis der analysierten Prozessdaten der zweiten Netzwerknachricht in einem Beeinflussungsschritt (219).

4. Verfahren (200) nach einem der voranstehenden Ansprüche, wobei die externe Dateninfrastruktur (300) ferner eine Steuerinstanz (303) mit einem Entwicklungsmodul (307) zum Erstellen eines Steuerprogramms umfasst, welches durch die erste Steuereinheit (101) und/oder die zweite Steuereinheit (103) zum Steuern der Feldgeräte (125) ausführbar ist, umfassend:
Generieren eines Steuerprogramms durch das Entwicklungsmodul (307) in einem Generierungsschritt (221),
Aussenden des generierten Steuerprogramms in einer dritten Netzwerknachricht an die erste Steuereinheit (101) und/oder die zweite Steuereinheit (103) durch das Nachrichtenverteilermodul (301) im Rahmen der Datenkommunikation innerhalb des ersten Kommunikationsnetzwerks (109) in einem dritten Sendeschritt (223), und
Ausführen des generierten Steuerprogramms und Beeinflussen des Automatisierungsprozesses durch die erste Steuereinheit (101) und/oder durch die zweite Steuereinheit (103) auf Basis des generierten Steuerprogramms in einem ersten Ausführungsschritt (225).

5. Verfahren (200) nach einem der voranstehenden Ansprüche,
wobei die externe Dateninfrastruktur (300) ferner eine Steuerinstanz (303) mit einem Ausführungsmodul (309) zum Ausführen eines Steuerprogramms zum Steuern der Feldgeräte (125) des Automatisierungssystems (100) umfasst, umfassend:
Ausführen eines Steuerprogramms und Generieren von Ausgangsprozessdaten durch das Ausführungsmodul (309) in einem zweiten Ausführungsschritt (227), wobei die Ausgangsprozessdaten Steuerungsanweisungen an die Feldgeräte (125) zum Steuern der Feldgeräte (125) auf Basis des Steuerprogramms umfassen,
Aussenden der generierten Ausgangsprozessdaten in einer vierten Netzwerknachricht an die erste Steuereinheit (101) und/oder die zweite Steuereinheit (103) durch das Nachrichtenverteilermodul (301) im Rahmen der Datenkommunikation innerhalb des ersten Kommunikationsnetzwerks (109) in einem vierten Sendeschritt (229), und
Beeinflussen des Automatisierungsprozesses auf Basis der generierten Ausgangsprozessdaten des generierten Steuerprogramms durch die erste Steuereinheit (101) und/oder durch die zweite Steuereinheit (103) in einem Steuerschritt (231).

6. Verfahren (200) nach einem der voranstehenden Ansprüche, wobei die Datenkommunikation zwischen Kommunikationsteilnehmern (121) eines Kommunikationsnetzwerks (119) auf Basis einer Publisher/Subscriber Architektur organisiert ist, und wobei Netzwerknachrichten der einzelnen Kommunikationsteilnehmer (121) mit einem Topic gekennzeichnet sind, anhand dessen ein Informationsgehalt der Netzwerknachrichten ablesbar ist, und wobei Netzwerknachrichten verschiedener Topics von unterschiedlichen Steuereinheiten (123) als Kommunikationsteilnehmer (121) abonniert sind.

7. Verfahren (200) nach Anspruch 6, wobei das Nachrichtenverteilermodul (301) als ein Message Broker ausgebildet ist, und wobei das Nachrichtenverteilmodul (301) eingerichtet ist, auf Basis der abonnierten Topics Kommunikationsnetzwerke (119) zu definieren und die Nachrichten der jeweiligen Topics abonnierenden Steuereinheiten (123) als Kommunikationsteilnehmer (121) in den jeweiligen Kommunikationsnetzwerken (121) zusammenzufassen.

8. Dateninfrastruktur (300) zum Ausführen des Verfahrens (200) nach einem der voranstehenden Ansprüche 1 bis 7, wobei die Dateninfrastruktur (300) als externe Komponente des Automatisierungssystems (100) ausbildbar und mit internen Komponenten eines Automatisierungssystems (100) verbindbar ist und umfasst:
ein Nachrichtenverteilermodul (301) zum Vermitteln einer Datenkommunikation zwischen Kommunikationsteilnehmern (121) eines Kommunikationsnetzwerks (119) des Automatisierungssystems (100), wobei das Nachrichtenverteilermodul (301) eingerichtet ist, wenigstens ein Kommunikationsnetzwerk (119) zu definieren, interne Komponenten des Automatisierungssystems (100) zu erkennen, interne Komponenten des Automatisierungssystems (100) dem wenigstens einen Kommunikationsnetzwerk (109) zuzuordnen und interne Komponenten des Automatisierungssystems (100) als Kommunikationsteilnehmer (121) des Kommunikationsnetzwerks (119) zu identifizieren,
von den Kommunikationsteilnehmern (121) im Rahmen einer Datenkommunikation zwischen den Kommunikationsteilnehmern (121) innerhalb des Kommunikationsnetzwerks (119) ausgesendete Netzwerknachrichten zu empfangen, adressierte Kommunikationsteilnehmer (121) des Kommunikationsnetzwerks (119) zu identifizieren, und
die empfangenen Netzwerknachrichten an die identifizierten Kommunikationsteilnehmer (121) weiterzuleiten.

9. Dateninfrastruktur (300) nach Anspruch 8, wobei das Nachrichtenverteilermodul (301) eingerichtet ist, aus einer Mehrzahl von internen Komponenten des Automatisierungssystems (100) eine Mehrzahl von Kommunikationsnetzwerken (119) zu definieren und die entsprechenden internen Komponenten als Kommunikationsteilnehmer (121) eines oder mehrerer Kommunikationsnetzwerke (119) zu identifizieren, wobei eine Datenkommunikation ausschließlich unter Kommunikationsteilnehmern (121) desselben Kommunikationsnetzwerks (119) ermöglicht ist.

10. Dateninfrastruktur (300) nach Anspruch 8 oder 9, ferner umfassend:
eine Steuerinstanz (303) mit einem Analysemodul (305), wobei das Analysemodul (305) eingerichtet ist, über mindestens eine erste Netzwerknachricht versendete Prozessdaten der internen Komponenten des Automatisierungssystems (100) zu analysieren, und wobei das Nachrichtenverteilermodul (301) eingerichtet ist, die analysierten Prozessdaten in mindestens einer zweiten Netzwerknachricht an die Kommunikationsteilnehmer (121) des Kommunikationsnetzwerks (119) auszusenden.

11. Dateninfrastruktur (300) nach Anspruch 8, 9 oder 10, wobei die Steuerinstanz (303) ferner ein Entwicklungsmodul (307) umfasst, wobei das Entwicklungsmodul (307) eingerichtet ist, ein Steuerprogramm zum Steuern des Automatisierungsprozesses zu generieren, und wobei das Nachrichtenverteilermodul (301) eingerichtet ist, das generierte Steuerprogramm in einer dritten Netzwerknachricht an die Kommunikationsteilnehmer (121) des Kommunikationsnetzwerks (119) auszusenden.

12. Dateninfrastruktur (300) nach einem der voranstehenden Ansprüche 8 bis 11, wobei die Steuerinstanz (303) ferner ein Ausführungsmodul (309) zum Ausführen eines Steuerprogramms zum Steuern des Automatisierungsprozesses umfasst, und wobei das Ausführungsmodul (309) eingerichtet ist, ein Steuerprogramm auszuführen und Ausgangsprozessdaten zu generieren, wobei die Ausgangsprozessdaten Steuerungsanweisungen an die interne Komponenten des Automatisierungssystems (100) zum Steuern des Automatisierungsprozesses auf Basis des Steuerprogramms umfassen, und wobei das Nachrichtenverteilermodul (301) eingerichtet ist, die generierten Ausgangsprozessdaten in einer vierten Netzwerknachricht an die Kommunikationsteilnehmer (121) des Kommunikationsnetzwerks (119) auszusenden.

13. Dateninfrastruktur (300) nach einem der voranstehenden Ansprüche 8 bis 12, ferner umfassend ein Eingabemodul (311) zum Eingeben von Eingabeaufforderungen an die Steuerinstanz (303), wobei das Eingabemodul (311) mit der Steuerinstanz (303) verbindbar ist und einem Nutzer ermöglicht:
einen Analyseprozess des Analysemoduls (305) einzusehen und/oder durch eine entsprechende Eingabeaufforderung zu beeinflussen,
über eine entsprechende Eingabeaufforderung an das Entwicklungsmodul (307) das Steuerprogramm zu generieren, und
die Steuerung des Automatisierungsprozesses zu beeinflussen und/oder Prozessdaten des Automatisierungsprozesses einzusehen.

14. Dateninfrastruktur (300) nach einem der voranstehenden Ansprüche 8 bis 13, wobei die Dateninfrastruktur (300) als ein Cloud-Server ausgestaltet ist, und wobei das Eingabemodul (311) als eine Website ausgestaltet ist, über die sich ein Nutzer in der Dateninfrastruktur (300) einwählen kann, und wobei das Eingabemodul (311) auf einer Rechnereinheit, insbesondere einem Personal Computer oder einem Mobilgerät aufrufbar ist.

## Claims

1. Method (200) for operating an automation system (100) having a first control unit (101) and at least one second control unit (103) and at least one third control unit (113) for carrying out at least one automation process and for controlling a plurality of field devices (125), and having an external data infrastructure (300) having a message distribution module (301) for conveying data communication between communication participants (121) in a communication network (109, 115), comprising the following steps:
defining a first communication network (109), detecting the control units (101, 103) of the automation system (100), assigning the first control unit (101) and the second control unit (103) to the first communication network (109) and identifying the first control unit (101) and the second control unit (103) as first communication participants (111) in the first communication network (109) by means of the message distribution module (301) in a first identification step (201),
transmitting a first network message, during data communication between the first communication participants (111) in the first communication network (109), from the first control unit (101) to the message distribution module (301) of the external data infrastructure (300) in a first transmission step (203),
identifying the second control unit (103) as the first communication participant (111) addressed by the first control unit (101) in the first communication network (109) by means of the message distribution module (301) in a second identification step (205),
forwarding the first network message transmitted by the first control unit (101) to the second control unit (103) by means of the message distribution module (301) in a forwarding step (207),
receiving the forwarded first network message by means of the second control unit (103) in a receiving step (209), and
defining a second communication network (115) and identifying the third control unit (113) and the first control unit (101) and/or the second control unit (103) as second communication participants (117) in the second communication network (115) by means of the message distribution module (301) in a third identification step, wherein data communication takes place solely between first communication participants (111) in the first communication network (109) or between second communication participants (117) in the second communication network (115).

2. Method (200) according to Claim 1, also comprising:
accepting input process data, which represent a state of the automation process carried out by the automation system (100), in the field devices (125) in an acceptance step (211),
transferring the input process data, as process data, from the field devices (125) to the first control unit (101) while exchanging process data in a transfer step (213), and
transmitting the process data in the first network message during data communication within the first communication network (109) by means of the first control unit (101) in the first transmission step (203) .

3. Method (200) according to Claim 2,
wherein the external data infrastructure (300) also comprises a control entity (303) having an analysis module (305) which is configured to analyse process data from the field devices (125) according to predetermined analysis rules, comprising:
analysing the process data in the first network message received by the message distribution module (301) by means of the analysis module (305) in an analysis step (215),
transmitting the analysed process data in a second network message to the first control unit (101) and/or the second control unit (103) by means of the message distribution module (301) during data communication within the first communication network (109) in a second transmission step (217), and
influencing the automation process by means of the first control unit (101) and/or the second control unit (103) on the basis of the analysed process data in the second network message in an influencing step (219) .

4. Method (200) according to one of the preceding claims, wherein the external data infrastructure (300) also comprises a control entity (303) having a development module (307) for creating a control program which can be executed by the first control unit (101) and/or the second control unit (103) in order to control the field devices (125), comprising:
generating a control program by means of the development module (307) in a generation step (221), transmitting the generated control program in a third network message to the first control unit (101) and/or the second control unit (103) by means of the message distribution module (301) during data communication within the first communication network (109) in a third transmission step (223), and
executing the generated control program and influencing the automation process by means of the first control unit (101) and/or by means of the second control unit (103) on the basis of the generated control program in a first execution step (225) .

5. Method (200) according to one of the preceding claims,
wherein the external data infrastructure (300) also comprises a control entity (303) having an execution module (309) for executing a control program for controlling the field devices (125) of the automation system (100), comprising:
executing a control program and generating output process data by means of the execution module (309) in a second execution step (227), wherein the output process data comprise control instructions to the field devices (125) for controlling the field devices (125) on the basis of the control program, transmitting the generated output process data in a fourth network message to the first control unit (101) and/or the second control unit (103) by means of the message distribution module (301) during data communication within the first communication network (109) in a fourth transmission step (229), and
influencing the automation process on the basis of the generated output process data from the generated control program by means of the first control unit (101) and/or by means of the second control unit (103) in a control step (231).

6. Method (200) according to one of the preceding claims, wherein data communication between communication participants (121) in a communication network (119) is organized on the basis of a publisher/subscriber architecture, and wherein network messages from the individual communication participants (121) are indicated with a topic, on the basis of which an information content of the network messages can be read, and wherein network messages of various topics are subscribed to by different control units (123) as communication participants (121).

7. Method (200) according to Claim 6, wherein the message distribution module (301) is in the form of a message broker, and wherein the message distribution module (301) is configured to define communication networks (119) on the basis of the topics subscribed to and to combine the control units (123) subscribing to messages of the respective topics as communication participants (121) in the respective communication networks (121) .

8. Data infrastructure (300) for carrying out the method (200) according to one of the preceding Claims 1 to 7, wherein the data infrastructure (300) can be formed as an external component of the automation system (100) and can be connected to internal components of an automation system (100) and comprises:
a message distribution module (301) for conveying data communication between communication participants (121) in a communication network (119) of the automation system (100), wherein the message distribution module (301) is configured to define at least one communication network (119), to detect internal components of the automation system (100), to assign internal components of the automation system (100) to the at least one communication network (109) and to identify internal components of the automation system (100) as communication participants (121) in the communication network (119),
to receive network messages transmitted by the communication participants (121) during data communication between the communication participants (121) within the communication network (119),
to identify addressed communication participants (121) in the communication network (119), and
to forward the received network messages to the identified communication participants (121).

9. Data infrastructure (300) according to Claim 8, wherein the message distribution module (301) is configured to define a plurality of communication networks (119) from a plurality of internal components of the automation system (100) and to identify the corresponding internal components as communication participants (121) in one or more communication networks (119), wherein data communication is enabled solely among communication participants (121) in the same communication network (119) .

10. Data infrastructure (300) according to Claim 8 or 9, also comprising:
a control entity (303) having an analysis module (305), wherein the analysis module (305) is configured to analyse process data which are transmitted via at least one first network message and relate to the internal components of the automation system (100), and wherein the message distribution module (301) is configured to transmit the analysed process data to the communication participants (121) in the communication network (119) in at least one second network message.

11. Data infrastructure (300) according to Claim 8, 9 or 10, wherein the control entity (303) also comprises a development module (307), wherein the development module (307) is configured to generate a control program for controlling the automation process, and wherein the message distribution module (301) is configured to transmit the generated control program to the communication participants (121) in the communication network (119) in a third network message.

12. Data infrastructure (300) according to one of the preceding Claims 8 to 11, wherein the control entity (303) also comprises an execution module (309) for executing a control program for controlling the automation process, and wherein the execution module (309) is configured to execute a control program and to generate output process data, wherein the output process data comprise control instructions to the internal components of the automation system (100) for controlling the automation process on the basis of the control program, and wherein the message distribution module (301) is configured to transmit the generated output process data to the communication participants (121) in the communication network (119) in a fourth network message.

13. Data infrastructure (300) according to one of the preceding Claims 8 to 12, also comprising an input module (311) for inputting input requests to the control entity (303), wherein the input module (311) can be connected to the control entity (303) and makes it possible for a user:
to inspect an analysis process of the analysis module (305) and/or to influence it by means of a corresponding input request,
to generate the control program by means of a corresponding input request to the development module (307), and
to influence the control of the automation process and/or to inspect process data relating to the automation process.

14. Data infrastructure (300) according to one of the preceding Claims 8 to 13, wherein the data infrastructure (300) is in the form of a cloud server, and
wherein the input module (311) is in the form of a website which can be used by a user to dial into the data infrastructure (300), and wherein the input module (311) can be called up on a computer unit, in particular a personal computer or a mobile device.

## Revendications

1. Procédé (200) pour faire fonctionner un système d'automatisation (100) comprenant une première unité de commande (101) et au moins une deuxième unité de commande (103) et au moins une troisième unité de commande (113) servant à exécuter au moins un processus d'automatisation et servant à commander une pluralité d'appareils de terrain (125), et une infrastructure de données externe (300) comprenant un module distributeur de messages (301) destiné à transmettre une communication de données entre des périphériques de communication (121) d'un réseau de communication (109, 115), comportant les étapes suivantes :
définition d'un premier réseau de communication (109), reconnaissance des unités de commande (101, 103) du système d'automatisation (100), association de la première unité de commande (101) et de la deuxième unité de commande (103) au premier réseau de communication (109) et identification de la première unité de commande (101) et de la deuxième unité de commande (103) en tant que premiers périphériques de communication (111) du premier réseau de communication (109) par le module distributeur de messages (301) dans une première étape d'identification (201),
envoi d'un premier message de réseau dans le cadre d'une communication de données entre les premiers périphériques de communication (111) du premier réseau de communication (109) par la première unité de commande (101) au module distributeur de messages (301) de l'infrastructure de données externe (300) dans une première étape d'émission (203),
identification de la deuxième unité de commande (103) en tant que premier périphérique de communication (111), adressé par la première unité de commande (101), du premier réseau de communication (109) par le module distributeur de messages (301) dans une deuxième étape d'identification (205),
retransmission du premier message de réseau envoyé par la première unité de commande (101) à la deuxième unité de commande (103) par le module distributeur de messages (301) dans une étape de retransmission (207),
réception du premier message de réseau retransmis par la deuxième unité de commande (103) dans une étape de réception (209), et
définition d'un deuxième réseau de communication (115) et identification de la troisième unité de commande (113) et de la première unité de commande (101) et/ou de la deuxième unité de commande (103) en tant que deuxièmes périphériques de communication (117) du deuxième réseau de communication (115) par le module distributeur de messages (301) dans une troisième étape d'identification, une communication de données s'effectuant exclusivement entre les premiers périphériques de communication (111) du premier réseau de communication (109) ou entre les deuxièmes périphériques de communication (117) du deuxième réseau de communication (115).

2. Procédé (200) selon la revendication 1, comprenant en outre :
enregistrement de données de processus d'entrée, lesquelles représentent un état du processus d'automatisation exécuté par le système d'automatisation (100), dans les appareils de terrain (125) dans une étape d'enregistrement (211),
transmission des données de processus d'entrée en tant que données de processus des appareils de terrain (125) à la première unité de commande (101) dans le cadre d'un échange de données de processus dans une étape de transmission (213), et
émission des données de processus dans le premier message de réseau dans le cadre de la communication de données à l'intérieur du premier réseau de communication (109) par la première unité de commande (101) dans la première étape d'émission (203).

3. Procédé (200) selon la revendication 2, l'infrastructure de données externe (300) comportant en outre une instance de commande (303) avec un module d'analyse (305), lequel est conçu pour analyser les données de processus des appareils de terrain (125) conformément à des prescriptions d'analyse prédéterminées, comprenant :
analyse, par le module d'analyse (305) dans une étape d'analyse (215), des données de processus du premier message de réseau reçu par le module distributeur de messages (301),
émission des données de processus analysées dans un deuxième message de réseau à la première unité de commande (101) et/ou la deuxième unité de commande (103) par le module distributeur de messages (301) dans le cadre de la communication de données à l'intérieur du premier réseau de communication (109) dans une deuxième étape d'émission (217), et
influence du processus d'automatisation par la première unité de commande (101) et/ou la deuxième unité de commande (103) sur la base des données de processus analysées du deuxième message de réseau dans une étape d'influence (219).

4. Procédé (200) selon l'une des revendications précédentes, l'infrastructure de données externe (300) comportant en outre une instance de commande (303) avec un module de développement (307) destiné à créer un programme de commande, lequel peut être exécuté par la première unité de commande (101) et/ou la deuxième unité de commande (103) en vue de commander les appareils de terrain (125), comprenant :
génération d'un programme de commande par le module de développement (307) dans une étape de génération (221), émission du programme de commande dans un troisième message de réseau à la première unité de commande (101) et/ou la deuxième unité de commande (103) par le module distributeur de messages (301) dans le cadre de la communication de données à l'intérieur du premier réseau de communication (109) dans une troisième étape d'émission (223), et
exécution du programme de commande généré et influence du processus d'automatisation par la première unité de commande (101) et/ou la deuxième unité de commande (103) sur la base du programme de commande généré dans une première étape d'exécution (225).

5. Procédé (200) selon l'une des revendications précédentes,
l'infrastructure de données externe (300) comportant en outre une instance de commande (303) avec un module d'exécution (309) destiné à exécuter un programme de commande servant à commander les appareils de terrain (125) du système d'automatisation (100), comprenant :
exécution d'un programme de commande et génération de données de processus de sortie par le module d'exécution (309) dans une deuxième étape d'exécution (227), les données de processus de sortie comprenant des instructions de commande aux appareils de terrain (125) destinées à commander les appareils de terrain (125) sur la base du programme de commande,
émission des données de processus de sortie dans un quatrième message de réseau à la première unité de commande (101) et/ou la deuxième unité de commande (103) par le module distributeur de messages (301) dans le cadre de la communication de données à l'intérieur du premier réseau de communication (109) dans une quatrième étape d'émission (229), et
influence du processus d'automatisation, sur la base des données de processus de sortie générées du programme de commande généré, par la première unité de commande (101) et/ou la deuxième unité de commande (103) dans une étape de commande (231).

6. Procédé (200) selon l'une des revendications précédentes, la communication de données entre les périphériques de communication (121) d'un réseau de communication (119) étant organisée sur la base d'une architecture éditeur/abonné, et les messages de réseau des périphériques de communication (121) individuels étant identifiés par un sujet au moyen duquel peut être lu un contenu d'information des messages de réseau, et différentes unités de commande (123) en tant que périphériques de communication (121) étant abonnées aux messages de réseau de différents sujets.

7. Procédé (200) selon la revendication 6, le module distributeur de messages (301) étant réalisé sous la forme d'un courtier de messages, et le module distributeur de messages (301) étant conçu pour, sur la base des sujets d'abonnement, définir les réseaux de communication (119) et regrouper dans les réseaux de communication (121) respectifs les messages des sujets respectifs auxquels sont abonnées les unités de commande (123) en tant que périphériques de communication (121).

8. Infrastructure de données (300) destinée à mettre en œuvre le procédé (200) selon l'une des revendications précédentes 1 à 7, l'infrastructure de données (300) pouvant être réalisée sous la forme d'un composant externe du système d'automatisation (100) et pouvant être connectée à des composants internes d'un système d'automatisation (100) et comportant :
un module distributeur de messages (301) destiné à transmettre une communication de données entre des périphériques de communication (121) d'un réseau de communication (119) du système d'automatisation (100), le module distributeur de messages (301) étant conçu pour définir au moins un réseau de communication (119), reconnaître les composants internes du système d'automatisation (100), associer les composants internes du système d'automatisation (100) à l'au moins un réseau de communication (109) et identifier les composants internes du système d'automatisation (100) en tant que périphériques de communication (121) du réseau de communication (119),
recevoir les messages de réseau émis par les périphériques de communication (121) dans le cas d'une communication de données entre les périphériques de communication (121) au sein du réseau de communication (119),
identifier les périphériques de communication (121) adressés du réseau de communication (119), et
retransmettre les messages de réseau reçus aux périphériques de communication (121) identifiés.

9. Infrastructure de données (300) selon la revendication 8, le module distributeur de messages (301) étant conçu pour, à partir d'une pluralité de composants internes du système d'automatisation (100), définir une pluralité de réseaux de communication (119) et identifier les composants internes correspondants en tant que périphériques de communication (121) d'un ou plusieurs réseaux de communication (119), une communication de données étant rendue possible exclusivement entre les périphériques de communication (121) du même réseau de communication (119).

10. Infrastructure de données (300) selon la revendication 8 ou 9, comprenant en outre une instance de commande (303) avec un module d'analyse (305), le module d'analyse (305) étant conçu pour analyser les données de processus des composants internes du système d'automatisation (100) envoyées par le biais d'au moins un premier message de réseau, et le module distributeur de messages (301) étant conçu pour émettre les données de processus analysées dans au moins un deuxième message de réseau aux périphériques de communication (121) du réseau de communication (119) .

11. Infrastructure de données (300) selon la revendication 8, 9 ou 10, l'instance de commande (303) comportant en outre un module de développement (307), le module de développement (307) étant conçu pour générer un programme de commande destiné à commander le processus d'automatisation, et le module distributeur de messages (301) étant conçu pour émettre le programme de commande généré dans un troisième message de réseau aux périphériques de communication (121) du réseau de communication (119).

12. Infrastructure de données (300) selon l'une des revendications précédentes 8 à 11, l'instance de commande (303) comportant en outre un module d'exécution (309) destiné à exécuter un programme de commande servant à commander le processus d'automatisation, et le module d'exécution (309) étant conçu pour exécuter un programme de commande et pour générer des données de processus de sortie, les données de processus de sortie comprenant des instructions de commande aux composants internes du système d'automatisation (100) destinées à commander le processus d'automatisation sur la base du programme de commande, et le module distributeur de messages (301) étant conçu pour émettre les données de processus de sortie données de processus de sortie générées dans un quatrième message de réseau aux périphériques de communication (121) du réseau de communication (119) .

13. Infrastructure de données (300) selon l'une des revendications précédentes 8 à 12, comportant en outre un module de saisie (311) destiné à appliquer des demandes de saisie à l'entrée de l'instance de commande (303), le module de saisie (311) pouvant être connecté à l'instance de commande (303) et permettant à un utilisateur :
de consulter un processus d'analyse du module d'analyse (305) et/ou de l'influencer par une demande de saisie correspondante,
générer le programme de commande par le biais d'une demande de saisie correspondante au niveau du module de développement (307), et
influencer la commande du processus d'automatisation et/ou consulter les données de processus du processus d'automatisation.

14. Infrastructure de données (300) selon l'une des revendications précédentes 8 à 13,
l'infrastructure de données (300) étant configurée en tant que serveur infonuagique, et
le module de saisie (311) étant configuré en tant que site Web par le biais duquel un utilisateur peut s'identifier dans l'infrastructure de données (300), et le module de saisie (311) pouvant être exécuté sur une unité de calcul, notamment un ordinateur personnel ou un appareil mobile.
